(19) Europäisches Patentamt / European Patent Office / Office européen des brevets

(11) **EP 4 613 592 A1**

(12) **EUROPEAN PATENT APPLICATION**
published in accordance with Art. 153(4) EPC

(43) Date of publication:
**10.09.2025 Bulletin 2025/37**

(51) International Patent Classification (IPC):
**B60W 30/06** (2006.01)   **G08G 1/14** (2006.01)

(21) Application number: **23899606.0**

(52) Cooperative Patent Classification (CPC):
**B62D 15/0285; B60W 30/06; G08G 1/14**

(22) Date of filing: **23.10.2023**

(86) International application number:
**PCT/CN2023/125839**

(87) International publication number:
**WO 2024/120025 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.12.2022 CN 202211549247**

(71) Applicant: **Shenzhen Yinwang Intelligent Technologies Co., Ltd.**
**Shenzhen, Guangdong 518129 (CN)**

(72) Inventors:
• **ZHANG, Jiaxu**
**Shenzhen, Guangdong 518129 (CN)**
• **WANG, Xinyu**
**Shenzhen, Guangdong 518129 (CN)**
• **ZHANG, Yu**
**Shenzhen, Guangdong 518129 (CN)**
• **SU, Zhuang**
**Shenzhen, Guangdong 518129 (CN)**
• **GENG, Xuewen**
**Shenzhen, Guangdong 518129 (CN)**
• **LI, Hongye**
**Shenzhen, Guangdong 518129 (CN)**

(74) Representative: **Pfenning, Meinig & Partner mbB Patent- und Rechtsanwälte**
**Theresienhöhe 11a**
**80339 München (DE)**

(54) **AUTO PARKING METHOD AND APPARATUS, AND INTELLIGENT DRIVING DEVICE**

(57)   An automatic parking method and apparatus, and an intelligent driving device are provided. The automatic parking method includes: obtaining information about a plurality of parking areas; obtaining a relative position relationship between a vehicle and each of the plurality of parking areas; determining, based on the relative position relationship, a difficulty coefficient for parking the vehicle into each parking area; and determining a first parking area as a target park-in area based on the relative position relationship and the difficulty coefficient, where the plurality of parking areas include the first parking area. The automatic parking method may be applied to an autonomous driving vehicle such as an intelligent vehicle or an electric vehicle, to help improve an intelligence degree of the vehicle in an automatic parking process.

400

| S401: Obtain information about a plurality of parking areas |
| --- |

↓

| S402: Obtain a relative position relationship between a vehicle and each of the plurality of parking areas |
| --- |

↓

| S403: Determine, based on the relative position relationship, a difficulty coefficient for parking the vehicle into each parking area |
| --- |

↓

| S404: Determine a first parking area as a target park-in area based on the relative position relationship and the difficulty coefficient, where the plurality of parking areas include the first parking area |
| --- |

FIG. 4

EP 4 613 592 A1

## Description

This application claims priority to Chinese Patent Application No. 202211549247.X, filed with the China National Intellectual Property Administration on December 5, 2022, and entitled "AUTOMATIC PARKING METHOD AND APPARATUS, AND INTELLIGENT DRIVING DEVICE", which is incorporated herein by reference in its entirety.

## TECHNICAL FIELD

This application relates to the field of intelligent driving, and more specifically, to an automatic parking method and apparatus, and an intelligent driving device.

## BACKGROUND

Automatic parking (automatic parking, AP) means automatic parking of vehicles into parking spaces. That is, an automatic driving system can semi-automatically or fully automatically help users park vehicles into parking spaces. Automatic parking may include automatic parking assist (automatic parking assist, APA), remote parking assist (remote parking assist, RPA), automated valet parking (automated valet parking, AVP), and the like.

In a current automatic parking system, in a process of controlling a vehicle to park into a parking space, an empty parking space closest to a rearview mirror on a front passenger seat side of the vehicle is usually selected as a default parking space. However, in this parking space selection manner, the selected parking space may be unfavorable to park-in of the vehicle. Consequently, a long time is consumed in a process of parking the vehicle.

In view of this, there is an urgent need to develop an automatic parking solution that can improve parking efficiency.

## SUMMARY

This application provides an automatic parking method and apparatus, and an intelligent driving device, to improve a humanization degree in an automatic parking process of a vehicle, so as to improve automatic parking efficiency.

According to a first aspect, an automatic parking method is provided. The method may be performed by an intelligent driving device; may be performed by a computing platform in an intelligent driving device; may be performed by a chip or a circuit used for an intelligent driving device; or may be performed by a cloud server associated with an intelligent driving device. This is not specifically limited in this application.

The intelligent driving device in this application may include a transportation means on land, a transportation means on water, a transportation means in air, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flying car, or a train), an industrial vehicle (for example, a forklift, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not specifically limited in embodiments of this application. For another example, the intelligent driving device may be a transportation means such as an aircraft or a ship.

The method includes: obtaining information about a plurality of parking areas; obtaining a relative position relationship between a vehicle and each of the plurality of parking areas; determining, based on the relative position relationship, a difficulty coefficient for parking the vehicle into each parking area; and determining a first parking area as a target park-in area based on the relative position relationship and the difficulty coefficient, where the plurality of parking areas include the first parking area.

In the foregoing technical solution, an appropriate parking area may be selected as the target park-in area based on a relative position relationship between the vehicle and a parking area and a difficulty coefficient for parking the vehicle into the parking area. This makes parking area selection more humanized, and helps improve automatic parking efficiency.

Optionally, the difficulty coefficient may be measured by using the number of gear changes.

Optionally, the difficulty coefficient may be measured by using the number of gear changes and a lateral space required for parking.

With reference to the first aspect, in some implementations of the first aspect, the relative position relationship includes distance information between the vehicle and each parking area and included angle information between a driving direction of the vehicle and a central axis of each parking area; and the determining, based on the relative position relationship, a difficulty coefficient for parking the vehicle into each parking area includes: determining the difficulty coefficient based on the distance information and the included angle information.

For example, the number of gear changes required for parking the vehicle into the parking area may be determined based on the distance information and the included angle information, and the difficulty coefficient may be determined based on the number of gear changes.

In the foregoing technical solution, a method for determining the difficulty coefficient is provided, so that a result of determining the target park-in area is more reliable, and is more in line with a driving habit of a human driver. In addition, when the number of the plurality of parking areas is small, this helps quickly determine the target park-in area.

With reference to the first aspect, in some implementations of the first aspect, the determining, based on the relative position relationship, a difficulty coefficient for parking the vehicle into each parking area includes: determining a first screening area based on a width of the vehicle, a minimum parking radius of the vehicle, and a relative position relationship between the vehicle and a second parking area, where the plurality of parking areas include the second parking area; and determining the difficulty coefficient based on a position of each parking area relative to the first screening area.

For example, the relative position relationship between the vehicle and the second parking area may include a position relationship between a rear axle center of the vehicle and a midpoint of an outer edge line in an opening direction of the second parking area.

For example, when the parking area is within the first screening area, the vehicle may park into the parking area through two gear changes or three gear changes; or when the parking area is outside the first screening area and is closer to a rear of the vehicle, the vehicle may park into the parking area through one gear change.

In some possible implementations, types of parking areas that are in the plurality of parking areas and that are located on a same side of the vehicle as the second parking area are the same. For example, all the parking areas may be perpendicular parking areas, or all the parking areas may be parallel parking areas.

In the foregoing technical solution, the difficulty coefficient may be directly determined based on the position of the parking area relative to the first screening area, and the difficulty coefficient does not need to be determined for each parking area based on the distance information and the included angle information. When the number of the plurality of parking areas is large, this helps quickly determine the difficulty coefficient corresponding to each parking area, to quickly determine the target park-in area.

With reference to the first aspect, in some implementations of the first aspect, the determining a first screening area includes: determining the first screening area based on a type of the second parking area, the width of the vehicle, the minimum parking radius of the vehicle, and the relative position relationship between the vehicle and the second parking area.

For example, because parking paths are different when the vehicle parks into different types of parking areas, types of the plurality of parking areas and the second parking area affect a size and a boundary of the first screening area.

In the foregoing technical solution, the first screening area may be determined based on the type of the parking area, to determine the difficulty coefficient. For different types of parking areas, there is a great difference in a position relationship between the selected target park-in area and the vehicle. This helps improve an intelligence degree and a humanization degree of the vehicle in a parking process.

With reference to the first aspect, in some implementations of the first aspect, the plurality of parking areas further include a third parking area, and the determining a first parking area as a target park-in area based on the relative position relationship and the difficulty coefficient includes: determining the first parking area as the target park-in area when a difficulty coefficient for parking the vehicle into the first parking area is the same as a difficulty coefficient for parking the vehicle into the third parking area, and the relative position relationship indicates that the first parking area is located on a rear side of the vehicle and the third parking area is located on a left side or a right side of the vehicle.

In a scenario of the foregoing technical solution, a parking area on the rear side of the vehicle is determined as the target park-in area, to be more in line with a parking habit of a human driver, and help improve a humanization degree of the vehicle.

With reference to the first aspect, in some implementations of the first aspect, the plurality of parking areas further include a fourth parking area, and when the first parking area and the fourth parking area are located on a front passenger seat side of the vehicle, the determining a first parking area as a target park-in area based on the relative position relationship and the difficulty coefficient includes: determining the first parking area as the target park-in area when a difficulty coefficient for parking the vehicle into the first parking area is the same as a difficulty coefficient for parking the vehicle into the fourth parking area, and the relative position relationship indicates that the first parking area is closer to a front row of the vehicle than the fourth parking area.

In a scenario of the foregoing technical solution, a parking area closer to the front row of the vehicle is determined as the target park-in area, to help a driver observe the target park-in area, be more in line with a parking habit of a human driver, and help improve a humanization degree of the vehicle.

With reference to the first aspect, in some implementations of the first aspect, the plurality of parking areas further include a fifth parking area, and the determining a first parking area as a target park-in area based on the relative position relationship and the difficulty coefficient includes: determining the first parking area as the target park-in area when the difficulty coefficient for parking the vehicle into the first parking area is the same as a difficulty coefficient for parking the vehicle into the fifth parking area, and the relative position relationship indicates that the first parking area is located on the front passenger seat side of the vehicle and the fifth parking area is located on a driver seat side of the vehicle.

In a scenario of the foregoing technical solution, a parking area on the front passenger seat side of the vehicle is determined as the target park-in area, to be in line with a driver habit and a related traffic rule, and help improve an intelligence degree and a humanization degree of the vehicle.

With reference to the first aspect, in some implementations of the first aspect, the plurality of parking areas further include a sixth parking area, and when the sixth parking area and the first parking area are located on the front passenger seat side of the vehicle, the determining a first parking area as a target park-in area based on the relative position relationship and the difficulty coefficient includes: determining the first parking area as the target park-in area based on the difficulty coefficient when the relative position relationship indicates that a central axis of the first parking area is perpendicular to a central axis of the vehicle and a central axis of the sixth parking area is parallel to the central axis of the vehicle.

In some possible implementations, when central axes of a plurality of parking areas on the front passenger seat side of the vehicle are perpendicular to the central axis of the vehicle, a parking area with a smallest difficulty coefficient is determined as the target park-in area.

In a scenario of the foregoing technical solution, a perpendicular parking space is determined as the target park-in area, to be in line with a driver habit, and help improve an intelligence degree and a humanization degree of the vehicle.

With reference to the first aspect, in some implementations of the first aspect, the method further includes: determining a first boundary of the first parking area based on outer contour information of the vehicle and first obstacle information around the first parking area; determining a second boundary of the first parking area based on parking space line information of the first parking area; and determining a first target pose of the vehicle in the first parking area based on the first boundary and the second boundary.

For example, after the vehicle parks into the first parking area based on the first target pose, the vehicle may be located within the second boundary, and maintain an appropriate spacing from the first boundary.

In the foregoing technical solution, when a pose of the vehicle after parking into a parking area is determined, impact of obstacle information around the parking area and parking space line information of the parking area is fully considered, so that after parking into the parking area, the vehicle does not collide with or scrape against a surrounding obstacle, and an outer contour of the vehicle does not go beyond the second boundary, to implement that the vehicle does not affect a parking process of another vehicle and a process of getting on/off the another vehicle by a person in the vehicle. This helps improve an intelligence degree and a humanization degree of the vehicle.

With reference to the first aspect, in some implementations of the first aspect, the determining a first target pose of the vehicle in the first parking area based on the first boundary and the second boundary includes: when the first boundary is greater than or equal to the second boundary, determining the first target pose based on the first boundary and the second boundary.

It may be understood that if the first boundary is less than the second boundary, it indicates that there is an obstacle in the parking area. Therefore, the parking area is not suitable for park-in of the vehicle.

In the foregoing technical solution, whether parking into the parking area can be implemented may be determined based on the obstacle information around the parking area, and the first target pose may be determined when it is determined that parking into the parking area can be implemented. This helps improve safety in a parking process and an intelligence degree of the vehicle.

With reference to the first aspect, in some implementations of the first aspect, the determining a first target pose of the vehicle in the first parking area based on the first boundary and the second boundary includes: determining the first target pose based on position information of a user in the vehicle, the first boundary, and the second boundary.

For example, when there is a user only in a driver seat in the vehicle, the determined first target pose needs to ensure that after the vehicle parks into the parking area, it is convenient for the user in the driver seat to get off the vehicle. For example, when there are users in both a driver seat and a front passenger seat in the vehicle, the determined first target pose needs to ensure that after the vehicle parks into the parking area, it is convenient for the user in the driver seat and the user in the front passenger seat to get off the vehicle.

In the foregoing technical solution, the first target pose determined based on a position of the user in the vehicle can provide convenience for the user in the vehicle to get on/off the vehicle after the vehicle parks into the target park-in area. The foregoing solution helps improve an intelligence degree of the vehicle.

With reference to the first aspect, in some implementations of the first aspect, the determining a first target pose of the vehicle in the first parking area based on the first boundary and the second boundary includes: determining the first target pose based on a first distance, a second distance, and a third distance, where the first distance is a distance between a front side of the vehicle and the first boundary, the second distance is a distance between a body side of the vehicle and the first boundary, and the third distance is a distance between a rear side of the vehicle and the first boundary.

It may be understood that a vehicle body includes a vehicle door. When the vehicle parks, opening of the vehicle door and a process of getting on/off the vehicle by the user in the vehicle may be involved. Therefore, after the vehicle parks, a vehicle body part may need to maintain a longer distance from the obstacle. Therefore, a side area of the vehicle is divided into the front side, the body side, and the rear side. When the target pose is determined, the second distance may be set longer, to provide convenience for the user in the vehicle to get on/off the vehicle.

With reference to the first aspect, in some implementations of the first aspect, the body side includes a first side and a second side, the first side corresponds to a cockpit of the vehicle, the second side corresponds to a part other than the cockpit, and the second distance includes a distance between the first side and the first boundary and a distance between the second side and the first boundary.

In some possible implementations, when there is a short distance between a first side of the vehicle and the obstacle, a user in a rear row of the vehicle may get off the vehicle from the other side of the vehicle. Therefore, when the target pose is determined, attention may be paid only to convenience of getting on/off the vehicle by a user in the front row. When the first boundary of the parking area is irregular, this helps properly use a space of the parking area.

With reference to the first aspect, in some implementations of the first aspect, after the vehicle parks into the first parking area, the method further includes: obtaining information about a park-out guide line and second obstacle information of a road indicated by the park-out guide line, where the park-out guide line is associated with a structure of the road; determining a park-out pose set based on the information about the park-out guide line; and determining, based on the second obstacle information, a first park-out pose as a second target pose for the vehicle to park out of the first parking area, where the park-out pose set includes the first park-out pose.

For example, that the park-out guide line is associated with a structure of the road may include one or more of the following: The park-out guide line is a center line of the road; when the road is curved, curvature of the parking guide line is the same as curvature of the road; and when the road is straight, the parking guide line is parallel to the road.

In the foregoing technical solution, a problem that a target park-out pose does not match road structure information and local map obstacle information can be resolved, and operation convenience of the vehicle after a park-out operation is completed can be improved.

With reference to the first aspect, in some implementations of the first aspect, the determining a park-out pose set based on the information about the park-out guide line includes: determining a second park-out pose based on the information about the park-out guide line; and determining the park-out pose set based on the second park-out pose.

With reference to the first aspect, in some implementations of the first aspect, the determining, based on the second obstacle information, a first park-out pose as a second target pose for the vehicle to park out of the first parking area includes: determining a first set from the park-out pose set based on the second obstacle information, where when the vehicle is at any park-out pose in the first set, the vehicle does not scrape against an obstacle indicated by the second obstacle information; determining a second set from the first set based on the second obstacle information, where when driving from a current position to any park-out pose in the second set, the vehicle does not scrape against the obstacle indicated by the second obstacle information; and determining the first park-out pose that is in the second set and that is closest to the second park-out pose as the second target pose.

According to a second aspect, an automatic parking method is provided. The method includes: determining a first boundary of a first parking area based on outer contour information of a vehicle and first obstacle information around the first parking area; determining a second boundary of the first parking area based on parking space line information of the first parking area; and determining a first target pose of the vehicle in the first parking area based on the first boundary and the second boundary.

With reference to the second aspect, in some implementations of the second aspect, the determining a first target pose of the vehicle in the first parking area based on the first boundary and the second boundary includes: when the first boundary is greater than or equal to the second boundary, determining the first target pose based on the first boundary and the second boundary.

With reference to the second aspect, in some implementations of the second aspect, the determining a first target pose of the vehicle in the first parking area based on the first boundary and the second boundary includes: determining the first target pose based on position information of a user in the vehicle, the first boundary, and the second boundary.

With reference to the second aspect, in some implementations of the second aspect, the determining a first target pose of the vehicle in the first parking area based on the first boundary and the second boundary includes: determining the first target pose based on a first distance, a second distance, and a third distance, where the first distance is a distance between a front side of the vehicle and the first boundary, the second distance is a distance between a body side of the vehicle and the first boundary, and the third distance is a distance between a rear side of the vehicle and the first boundary.

With reference to the second aspect, in some implementations of the second aspect, the body side includes a first side and a second side, the first side corresponds to a cockpit of the vehicle, the second side corresponds to a part other than the cockpit, and the second distance includes a distance between the first side and the first boundary and a distance between the second side and the first boundary.

According to a third aspect, an automatic parking method is provided. The method includes: obtaining information about a park-out guide line and second obstacle information of a road indicated by the park-out guide line, where the park-out guide line is associated with a structure of the road; determining a park-out pose set based on the information about the park-out guide line; and determining, based on the second obstacle information, a first park-out pose as a second target pose for a vehicle to park out of a parking area in which the vehicle is currently located, where the park-out pose set includes the first park-out pose.

With reference to the third aspect, in some implementations of the third aspect, the determining a park-out pose set based on the information about the park-out guide line includes: determining a second park-out pose based on the information about the park-out guide line; and determining the park-out pose set based on the second park-out pose.

With reference to the third aspect, in some implementations of the third aspect, the determining, based on the second obstacle information, a first park-out pose as a second target pose for a vehicle to park out of a parking area in which the vehicle is currently located includes: determining a first set from the park-out pose set based on the second obstacle information, where when the vehicle is at any park-out pose in the first set, the vehicle does not scrape against an obstacle indicated by the second obstacle information; determining a second set from the first set based on the second obstacle information, where when driving from a current position to any park-out pose in the second set, the vehicle does not scrape against the obstacle indicated by the second obstacle information; and determining the first park-out pose that is in the second set and that is closest to the second park-out pose as the second target pose.

According to a fourth aspect, an automatic parking apparatus is provided. The apparatus includes a first obtaining unit, a second obtaining unit, a first determining unit, and a second determining unit. The first obtaining unit is configured to obtain information about a plurality of parking areas. The second obtaining unit is configured to obtain a relative position relationship between a vehicle and each of the plurality of parking areas. The first determining unit is configured to determine, based on the relative position relationship, a difficulty coefficient for parking the vehicle into each parking area. The second determining unit is configured to determine a first parking area as a target park-in area based on the relative position relationship and the difficulty coefficient, where the plurality of parking areas include the first parking area.

With reference to the fourth aspect, in some implementations of the fourth aspect, the relative position relationship includes distance information between the vehicle and each parking area and included angle information between a driving direction of the vehicle and a central axis of each parking area; and the first determining unit is configured to determine the difficulty coefficient based on the distance information and the included angle information.

With reference to the fourth aspect, in some implementations of the fourth aspect, the first determining unit is configured to: determine a first screening area based on a width of the vehicle, a minimum parking radius of the vehicle, and a relative position relationship between the vehicle and a second parking area, where the plurality of parking areas include the second parking area; and determine the difficulty coefficient based on a position of each parking area relative to the first screening area.

With reference to the fourth aspect, in some implementations of the fourth aspect, the first determining unit is configured to determine the first screening area based on a type of the second parking area, the width of the vehicle, the minimum parking radius of the vehicle, and the relative position relationship between the vehicle and the second parking area.

With reference to the fourth aspect, in some implementations of the fourth aspect, the plurality of parking areas further include a third parking area, and the second determining unit is configured to determine the first parking area as the target park-in area when a difficulty coefficient for parking the vehicle into the first parking area is the same as a difficulty coefficient for parking the vehicle into the third parking area, and the relative position relationship indicates that the first parking area is located on a rear side of the vehicle and the third parking area is located on a left side or a right side of the vehicle.

With reference to the fourth aspect, in some implementations of the fourth aspect, the plurality of parking areas further include a fourth parking area, and when the first parking area and the fourth parking area are located on a front passenger seat side of the vehicle, the second determining unit is configured to determine the first parking area as the target park-in area when a difficulty coefficient for parking the vehicle into the first parking area is the same as a difficulty coefficient for parking the vehicle into the fourth parking area, and the relative position relationship indicates that the first parking area is closer to a front row of the vehicle than the fourth parking area.

With reference to the fourth aspect, in some implementations of the fourth aspect, the plurality of parking areas further include a fifth parking area, and the second determining unit is configured to determine the first parking area as the target park-in area when the difficulty coefficient for parking the vehicle into the first parking area is the same as a difficulty coefficient for parking the vehicle into the fifth parking area, and the relative position relationship indicates that the first parking area is located on the front passenger seat side of the vehicle and the fifth parking area is located on a driver seat side of the vehicle.

With reference to the fourth aspect, in some implementations of the fourth aspect, the plurality of parking areas further include a sixth parking area, and when the sixth parking area and the first parking area are located on the front passenger seat side of the vehicle, the second determining unit is configured to determine the first parking area as the target park-in area based on the difficulty coefficient when the relative position relationship indicates that a central axis of the first parking area is perpendicular to a central axis of the vehicle and a central axis of the sixth parking area is parallel to the central axis of the vehicle.

With reference to the fourth aspect, in some implementations of the fourth aspect, the apparatus further includes a third determining unit, configured to: determine a first boundary of the first parking area based on outer contour information of the vehicle and first obstacle information around the first parking area; determine a second boundary of the first parking area based on parking space line information of the first parking area; and determine a first target pose of the vehicle in the first parking area based on the first boundary and the second boundary.

With reference to the fourth aspect, in some implementations of the fourth aspect, the third determining unit is configured to: when the first boundary is greater than or equal to the second boundary, determine the first target pose based on the first boundary and the second boundary.

With reference to the fourth aspect, in some implementations of the fourth aspect, the third determining unit is configured to determine the first target pose based on position information of a user in the vehicle, the first boundary, and the second boundary.

With reference to the fourth aspect, in some implementations of the fourth aspect, the third determining unit is configured to determine the first target pose based on a first distance, a second distance, and a third distance, where the first distance is a distance between a front side of the vehicle and the first boundary, the second distance is a distance between a body side of the vehicle and the first boundary, and the third distance is a distance between a rear side of the vehicle and the first boundary.

With reference to the fourth aspect, in some implementations of the fourth aspect, the body side includes a first side and a second side, the first side corresponds to a cockpit of the vehicle, the second side corresponds to a part other than the cockpit, and the second distance includes a distance between the first side and the first boundary and a distance between the second side and the first boundary.

With reference to the fourth aspect, in some implementations of the fourth aspect, the apparatus includes a third obtaining unit and a fourth determining unit. The third obtaining unit is configured to obtain information about a park-out guide line and second obstacle information of a road indicated by the park-out guide line, where the park-out guide line is associated with a structure of the road. The fourth determining unit is configured to: determine a park-out pose set based on the information about the park-out guide line; and determine, based on the second obstacle information, a first park-out pose as a second target pose for the vehicle to park out of the first parking area, where the park-out pose set includes the first park-out pose.

With reference to the fourth aspect, in some implementations of the fourth aspect, the fourth determining unit is configured to: determine a second park-out pose based on the information about the park-out guide line; and determine the park-out pose set based on the second park-out pose.

With reference to the fourth aspect, in some implementations of the fourth aspect, the fourth determining unit is configured to: determine a first set from the park-out pose set based on the second obstacle information, where when the vehicle is at any park-out pose in the first set, the vehicle does not scrape against an obstacle indicated by the second obstacle information; determine a second set from the first set based on the second obstacle information, where when driving from a current position to any park-out pose in the second set, the vehicle does not scrape against the obstacle indicated by the second obstacle information; and determine the first park-out pose that is in the second set and that is closest to the second park-out pose as the second target pose.

According to a fifth aspect, an automatic parking apparatus is provided. The apparatus includes a third determining unit, configured to: determine a first boundary of a first parking area based on outer contour information of a vehicle and first obstacle information around the first parking area; determine a second boundary of the first parking area based on parking space line information of the first parking area; and determine a first target pose of the vehicle in the first parking area based on the first boundary and the second boundary.

With reference to the fifth aspect, in some implementations of the fifth aspect, the third determining unit is configured to: when the first boundary is greater than or equal to the second boundary, determine the first target pose based on the first boundary and the second boundary.

With reference to the fifth aspect, in some implementations of the fifth aspect, the third determining unit is configured to determine the first target pose based on position information of a user in the vehicle, the first boundary, and the second boundary.

With reference to the fifth aspect, in some implementations of the fifth aspect, the third determining unit is configured to determine the first target pose based on a first distance, a second distance, and a third distance, where the first distance is a distance between a front side of the vehicle and the first boundary, the second distance is a distance between a body side of the vehicle and the first boundary, and the third distance is a distance between a rear side of the vehicle and the first boundary.

With reference to the fifth aspect, in some implementations of the fifth aspect, the body side includes a first side and a second side, the first side corresponds to a cockpit of the vehicle, the second side corresponds to a part other than the cockpit, and the second distance includes a distance between the first side and the first boundary and a distance between the second side and the first boundary.

According to a sixth aspect, an automatic parking apparatus is provided. The apparatus includes a third obtaining unit and a fourth determining unit. The third obtaining unit is configured to obtain information about a park-out guide line and second obstacle information of a road indicated by the park-out guide line, where the park-out guide line is associated with a structure of the road. The fourth determining unit is configured to: determine a park-out pose set based on the information about the park-out guide line; and determine, based on the second obstacle information, a first park-out pose as a second target pose for a vehicle to park out of a parking area in which the vehicle is currently located, where the park-out pose set includes the first park-out pose.

With reference to the sixth aspect, in some implementations of the sixth aspect, the fourth determining unit is configured to: determine a second park-out pose based on the information about the park-out guide line; and determine the park-out pose set based on the second park-out pose.

With reference to the sixth aspect, in some implementations of the sixth aspect, the fourth determining unit is configured to: determine a first set from the park-out pose set based on the second obstacle information, where when the vehicle is at any park-out pose in the first set, the vehicle does not scrape against an obstacle indicated by the second obstacle information; determine a second set from the first set based on the second obstacle information, where when driving from a current position to any park-out pose in the second set, the vehicle does not scrape against the obstacle indicated by the second obstacle information; and determine the first park-out pose that is in the second set and that is closest to the second park-out pose as the second target pose.

According to a seventh aspect, an automatic parking apparatus is provided. The apparatus includes: a memory, configured to store a computer program; and a processor, configured to execute the computer program stored in the memory, to enable the apparatus to perform the method in any one of the possible implementations of the first aspect to the third aspect.

According to an eighth aspect, an intelligent driving device is provided. The intelligent driving device includes the apparatus in any one of the possible implementations of the fourth aspect to the seventh aspect.

With reference to the eighth aspect, in some implementations of the eighth aspect, the intelligent driving device is a vehicle.

According to a ninth aspect, a server is provided. The server includes the apparatus in any one of the possible implementations of the fourth aspect to the seventh aspect.

According to a tenth aspect, an automatic parking system is provided. The system includes the server in any possible implementation of the ninth aspect and a vehicle. The vehicle performs automatic parking based on one or more of a first parking area, a first target pose, and a second target pose that are determined by the server.

According to an eleventh aspect, a computer program product is provided. The computer program product includes computer program code. When the computer program code is run on a computer, the computer is enabled to perform the method in any one of the possible implementations of the first aspect to the third aspect.

It should be noted that the computer program code may be entirely or partially stored in a first storage medium. The first storage medium may be packaged together with a processor, or may be packaged separately from a processor.

According to a twelfth aspect, a computer-readable medium is provided. The computer-readable medium stores instructions. When the instructions are executed by a processor, the processor is enabled to implement the method in any one of the possible implementations of the first aspect to the third aspect.

According to a thirteenth aspect, a chip is provided. The chip includes a circuit, and the circuit is configured to perform the method in any one of the possible implementations of the first aspect to the third aspect.

## BRIEF DESCRIPTION OF DRAWINGS

FIG. 1 is a functional block diagram of a vehicle according to an embodiment of this application;
FIG. 2 is a diagram of a system architecture required for implementing an automatic parking method according to an embodiment of this application;
FIG. 3 is a diagram of a parking scenario according to an embodiment of this application;
FIG. 4 is a schematic flowchart of an automatic parking method according to an embodiment of this application;
FIG. 5 is a diagram of a relative position relationship between a vehicle and a parking area according to an embodiment of this application;
FIG. 6 is a diagram of a screening area according to an embodiment of this application;
FIG. 7 is a diagram of another screening area according to an embodiment of this application;
FIG. 8 is a diagram of a parking scenario according to an embodiment of this application;
FIG. 9 is a diagram of another parking scenario according to an embodiment of this application;
FIG. 10 is a schematic flowchart of an automatic parking method according to an embodiment of this application;
FIG. 11 is a diagram of vehicle multi-circle envelope obstacle detection according to an embodiment of this application;
FIG. 12 is a diagram of a boundary of a parking area according to an embodiment of this application;
FIG. 13 is a diagram of division of a side area of a vehicle according to an embodiment of this application;

FIG. 14 is a diagram of different thresholds corresponding to different side areas of a vehicle in a parking process according to an embodiment of this application;

FIG. 15(a), FIG. 15(b), FIG. 15(c), FIG. 15(d), FIG. 15(e), and FIG. 15(f) are a diagram of a pose of a vehicle after parking into a parking area according to an embodiment of this application;

FIG. 16 is a schematic flowchart of an automatic parking method according to an embodiment of this application;

FIG. 17 is a diagram of a parking scenario according to an embodiment of this application;

FIG. 18 is a diagram of coordinate transformation according to an embodiment of this application;

FIG. 19 is a diagram of a method required for determining a park-out pose according to an embodiment of this application;

FIG. 20 is a block diagram of an automatic parking apparatus according to an embodiment of this application; and

FIG. 21 is a block diagram of another automatic parking apparatus according to an embodiment of this application.

## DESCRIPTION OF EMBODIMENTS

In the descriptions of embodiments of this application, unless otherwise specified, "/" means "or". For example, A/B may mean A or B. In this specification, "and/or" is an association relationship for describing associated objects, and represents that three relationships may exist. For example, A and/or B may represent the following three cases: Only A exists, both A and B exist, and only B exists. In this application, "at least one" means one or more, and "a plurality of" means two or more. "At least one of the following items" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural.

The prefix words "first", "second", and the like used in embodiments of this application are merely intended to distinguish between different described objects, and impose no limitation on positions, sequences, priorities, numbers, content, or the like of the described objects. In embodiments of this application, use of prefix words such as an ordinal number used to distinguish between described objects constitutes no limitation on the described objects. For descriptions of the described objects, refer to the descriptions of the context in the claims or embodiments. The use of such prefix words should not constitute an unnecessary limitation.

The following describes technical solutions of embodiments of this application with reference to accompanying drawings.

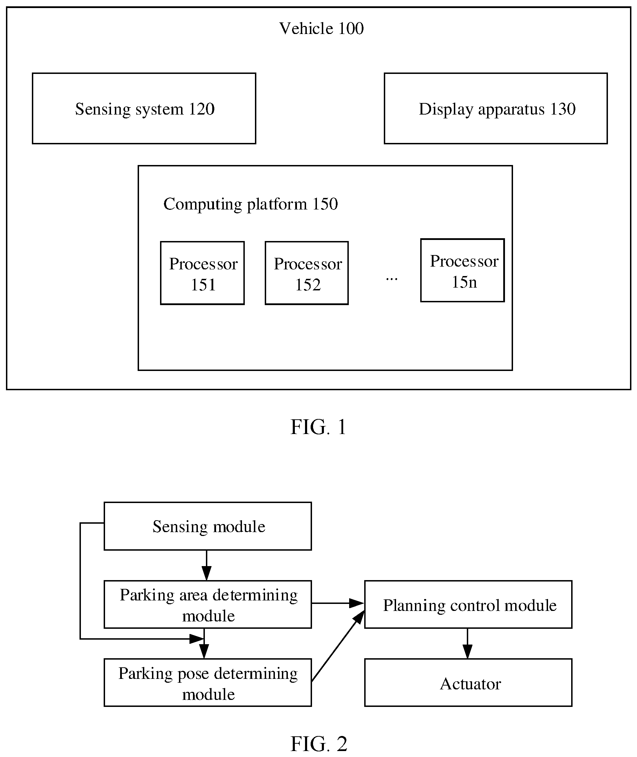

FIG. 1 is a functional block diagram of a vehicle according to an embodiment of this application. As shown in FIG. 1, the vehicle 100 may include a sensing system 120, a display apparatus 130, and a computing platform 150. The sensing system 120 may include several sensors configured to sense information about an environment around the vehicle 100. For example, the sensing system 120 may include a positioning system. The positioning system may be a global positioning system (global positioning system, GPS), a BeiDou system, or another positioning system. For another example, the sensing system 120 may further include one or more of an inertial measurement unit (inertial measurement unit, IMU), a lidar, a millimeter-wave radar, an ultrasonic radar, and a camera apparatus.

Some or all of functions of the vehicle 100 may be controlled by the computing platform 150. The computing platform 150 may include processors 151 to 15n, and the processor is a circuit having a signal processing capability. In an implementation, the processor may be a circuit having instruction reading and running capabilities, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit, and the logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

The display apparatus 130 in a cockpit is mainly classified into two types. A first type is a vehicle-mounted display screen, and a second type is a projection display screen, for example, a head-up display (head-up display, HUD) apparatus. The vehicle-mounted display screen is a physical display screen, and is an important part of an in-vehicle infotainment system. A plurality of display screens, for example, a digital instrument display screen and a central control screen, may be disposed in the cockpit. The head-up display is also referred to as a head-up display system, and is mainly configured to display driving information such as a speed and navigation on a display device (for example, a windshield) in front of a driver, to reduce a line-of-sight distraction time of the driver, avoid a pupil change caused by line-of-sight distraction of the driver, and improve driving safety and comfort. For example, the HUD includes a combiner head-up display (combiner HUD, C-HUD) system, a windshield head-up display (windshield HUD, W-HUD) system, and an augmented reality head-up display (augmented reality HUD, AR-HUD) system.

The vehicle 100 may include an advanced driver assistance system (advanced driver assistance system, ADAS). The ADAS obtains surrounding information of the vehicle by using a plurality of sensors (including but not limited to the lidar, the millimeter-wave radar, the camera apparatus, the ultrasonic sensor, the global positioning system, and the inertial measurement unit) in the vehicle, and analyzes and processes the obtained information, to implement functions such as obstacle sensing, target recognition, vehicle locating, path planning, and driver monitoring/reminder, so as to improve safety, automation, and comfort of vehicle driving.

In terms of logical functions, the ADAS system usually includes three main functional modules: a sensing module, a decision-making module, and an execution module. The sensing module senses a surrounding environment of a vehicle body by using the sensor, and inputs corresponding real-time data to a processing center at a decision-making layer, and the sensing module mainly includes a vehicle-mounted camera/an ultrasonic radar/a millimeter-wave radar/a lidar, or the like. The decision-making module makes a corresponding decision by using a computing apparatus and an algorithm and based on information obtained by the sensing module. After receiving a decision-making signal from the decision-making module, the execution module takes a corresponding action, for example, driving, changing a lane, steering, braking, or warning.

At different autonomous driving levels (L0 to L5), the ADAS may implement different levels of autonomous driving assistance based on information obtained by using an artificial intelligence algorithm and a plurality of sensors. The autonomous driving levels (L0 to L5) are based on a classification standard of the society of automotive engineers (society of automotive engineers, SAE). The level L0 indicates no automation, the level L1 indicates driving assistance, the level L2 indicates partial automation, the level L3 indicates conditional automation, the level L4 indicates high automation, and the level L5 indicates full automation. Tasks of monitoring road conditions and making a response at the levels L1 to L3 are jointly completed by a driver and a system, and the driver needs to take over a dynamic driving task. At the levels L4 and L5, the driver can implement a full transition to a role of a passenger. Currently, functions that can be implemented by the ADAS mainly include but are not limited to adaptive cruise control, automatic emergency braking, automatic parking, blind spot monitoring, forward intersection traffic warning/braking, rear intersection traffic warning/braking, forward collision warning, lane departure warning, lane keeping assist, rear collision warning, traffic sign recognition, traffic jam assistance, highway assist, and the like. It should be understood that the foregoing functions may have specific modes at different autonomous driving levels (L0 to L5). A higher autonomous driving level corresponds to a more intelligent mode. For example, automatic parking may include APA, RPA, and AVP. For APA, the driver does not need to control a steering wheel, but still needs to control a throttle and a brake in the vehicle. For RPA, the driver may remotely park the vehicle outside the vehicle by using a terminal (for example, a mobile phone). For AVP, the vehicle may complete parking without the driver. From a perspective of a corresponding autonomous driving level, APA is approximately at the level L1, RPA is approximately at the level L2 or L3, and AVP is approximately at the level L4.

As described above, in a current automatic parking system, in a process of controlling a vehicle to park into a parking space, an empty parking space closest to a rearview mirror on a front passenger seat side of the vehicle is usually selected as a default parking space. However, in this parking space selection manner, the selected parking space may be unfavorable to park-in of the vehicle. Consequently, in a process of parking the vehicle into the parking space, the number of gear changes is large and long duration is required. In addition, in the current automatic parking system, in the process of controlling the vehicle to park into the parking space, a target park-in pose is usually based on a centered parking principle. However, when the vehicle centrally parks into the parking space, a person in the vehicle or another vehicle possibly cannot get on/off the vehicle.

In view of this, embodiments of this application provide an automatic parking method and apparatus, and a vehicle, so that an appropriate parking area can be selected as a target park-in area based on a relative position relationship between a vehicle and a parking area and a difficulty coefficient for parking the vehicle into the parking area, to help improve automatic parking efficiency. In addition, before the vehicle is controlled to park into the target park-in area, a target pose of the vehicle after parking into the target park-in area may be determined based on obstacle information around the vehicle and parking space line information, so that after parking into the target park-in area, the vehicle does not affect passengers in the vehicle and another vehicle in getting on/off the vehicle.

FIG. 2 is a diagram of a system architecture required for implementing an automatic parking method according to an embodiment of this application. The system 200 includes a sensing module, a parking area determining module, a parking pose determining module, a planning control module, and an actuator. The sensing module may include one or more camera apparatuses or one or more radar sensors in the sensing system 120 shown in FIG. 1, and is configured to collect surrounding information of a vehicle, for example, information about a parking area and information about an obstacle. The sensing module may further process the collected surrounding environment information, and establish a world model including a road, an obstacle, and the like for a downstream module (for example, the parking area determining module, the parking pose determining module, and the planning control module). The parking area determining module may be one or more processors in the computing platform 150 shown in FIG. 1, or may be one or more processors in a cloud server associated with the vehicle 100 shown in FIG. 1, and is configured to select a target park-in area based on the information about the parking area; or is configured to determine, based on the surrounding environment information of the vehicle, a current parking area out of which the vehicle needs to park. The parking pose determining module may be one or more processors in the computing platform 150 shown in FIG. 1, or may be one or more processors in the cloud server associated with the vehicle 100 shown in FIG. 1, and is configured to determine, based on parking space line information of the target park-in area and obstacle information around the area, a target park-in pose for the vehicle to park into the area; or is configured to determine, based on a park-out guide line and obstacle information of a road indicated by the park-out guide line, a target park-out pose for the vehicle to park out of a parking area. The planning control module may further plan, based on the target park-in area output by the parking area determining module and the target park-in pose output by the parking pose determining module, a movement trajectory for the vehicle to park into the target park-in area; or may further plan, based on the parking area in which the vehicle is currently located and that is output by the parking area determining module and the target park-out pose output by the parking pose determining module, a movement trajectory for the vehicle to park into the target park-in area. Further, the planning control module calculates a corresponding control value based on the planned movement trajectory, and outputs the control value to the actuator. When the actuator executes the control value, the vehicle is controlled to drive based on the planned movement trajectory, and park into the target park-in area or park out of the current parking area. In some possible implementations, the actuator may further include steering and braking control systems in the vehicle 100.

It should be understood that the foregoing modules are merely examples. In an actual application, the foregoing modules may be added or deleted based on an actual requirement. For example, in the system architecture shown in FIG. 2, the parking area determining module and the parking pose determining module may be combined into one module.

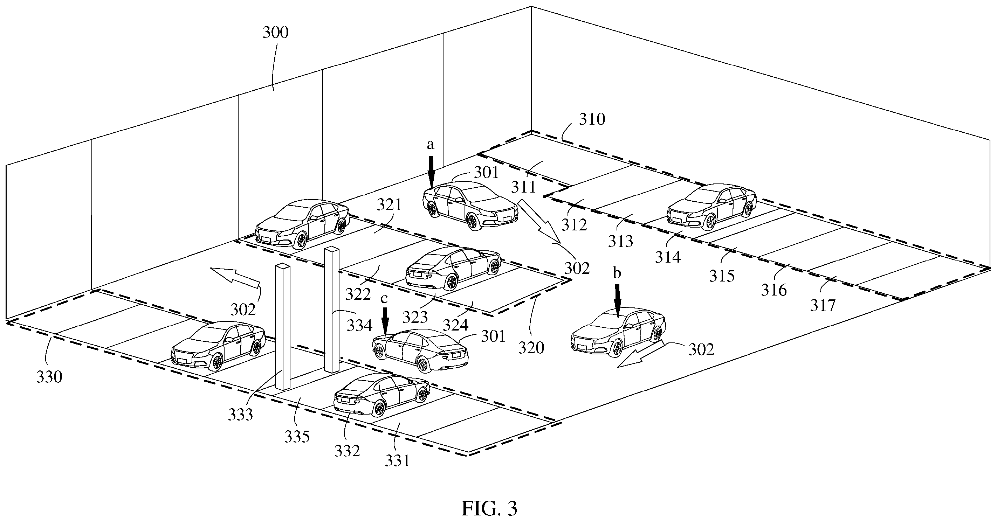

FIG. 3 is a diagram of a parking scenario. As shown in FIG. 3, a parking lot 300 includes a plurality of idle parking spaces and non-idle parking spaces, where 333 and 334 are columns in the parking lot 300. In a process in which a vehicle 301 drives along a driving indication line 302 after driving to the parking lot 300, information about a surrounding environment may be obtained by using a sensor, and information about a plurality of parking areas may be determined based on the information about the surrounding environment. For example, when the vehicle 301 is located at a position a in the figure, the plurality of parking areas may include a parking area 310 on a left side of the vehicle 301 and a parking area 320 on a right side of the vehicle 301. The parking area 310 may include idle parking spaces 311, 312, and 313, and may further include a non-idle parking space 314. The parking area 320 may include idle parking spaces 321 and 322, and may further include a non-idle parking space 323. In addition, the idle parking space may include a perpendicular parking space (for example, the parking space 312 and the parking space 313) and a parallel parking space (for example, the parking space 311), or may further include an angled parking space (not shown in the figure). When the vehicle 301 is located at a position b in the figure, the plurality of parking areas may include a parking area 310 on a rear side of the vehicle 301 and a parking area 320 on a right side of the vehicle 301. The parking area 310 may include idle parking spaces 315, 316, and 317, and may further include a non-idle parking space 314. The parking area 320 may include an idle parking space 324 and a non-idle parking space 323. When the vehicle 301 is located at a position c in the figure, the plurality of parking areas may include a parking area 320 on a right side of the vehicle 301 and a parking area 330 on a left side of the vehicle 301. The parking area 320 may include an idle parking space 324 and a non-idle parking space 323. The parking area 330 may include an idle parking space 331 and a parking space 335, and may further include a non-idle parking space 332. Further, the vehicle may select an idle parking space from the plurality of parking areas for parking.

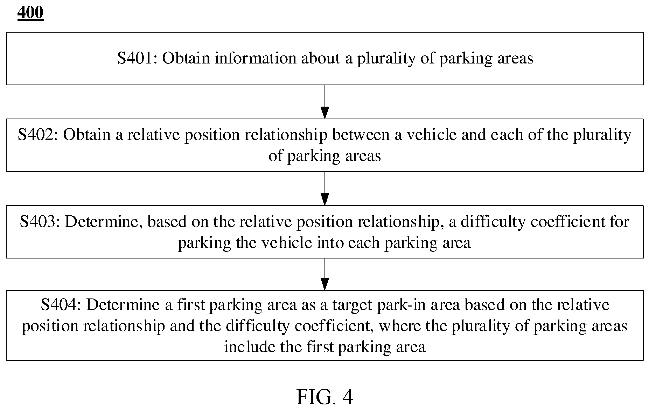

FIG. 4 is a schematic flowchart of an automatic parking method according to an embodiment of this application. The method 400 may be performed by the vehicle 100 shown in FIG. 1. More specifically, the method 400 may be performed by the computing platform 150 in the vehicle 100. Alternatively, the method 400 may be performed by the parking area determining module shown in FIG. 2. For example, the following provides descriptions by using an example in which the method 400 is performed by a computing platform in a vehicle. The method 400 may include S401 to S404.

S401: Obtain information about a plurality of parking areas.

For example, the plurality of parking areas may include one or more empty parking spaces.

For example, the vehicle is the vehicle 301 shown in FIG. 3. When the vehicle 301 is located at the position a, the plurality of parking areas may include the parking area 310 and/or the parking area 320 shown in FIG. 3; or the plurality of parking areas may include at least one of the parking space 311, the parking space 312, the parking space 313, the parking space 321, and the parking space 322 shown in FIG. 3. When the vehicle 301 is located at the position b in the figure, the plurality of parking areas may include the parking area 310 and/or the parking area 320 shown in FIG. 3; or the plurality of parking areas may include at least one of the parking space 315, the parking space 316, the parking space 317, and the parking space 324 shown in FIG. 3. When the vehicle 301 is located at the position c, the plurality of parking areas may include the parking area 320 and/or the parking area 330 shown in FIG. 3; or the plurality of parking areas may include at least one of the parking space 322, the parking space 324, the parking space 331, and the parking space 335 shown in FIG.

3.

S402: Obtain a relative position relationship between the vehicle and each of the plurality of parking areas.

In some possible implementations, the plurality of parking areas may be clustered based on a vehicle coordinate system, and the plurality of parking areas may be classified into the following five types of areas: a parking area on a rear side of the vehicle, a parking area on a rear left side of the vehicle, a parking area on a rear right side of the vehicle, a parking area on a left side of the vehicle, and a parking area on a right side of the vehicle.

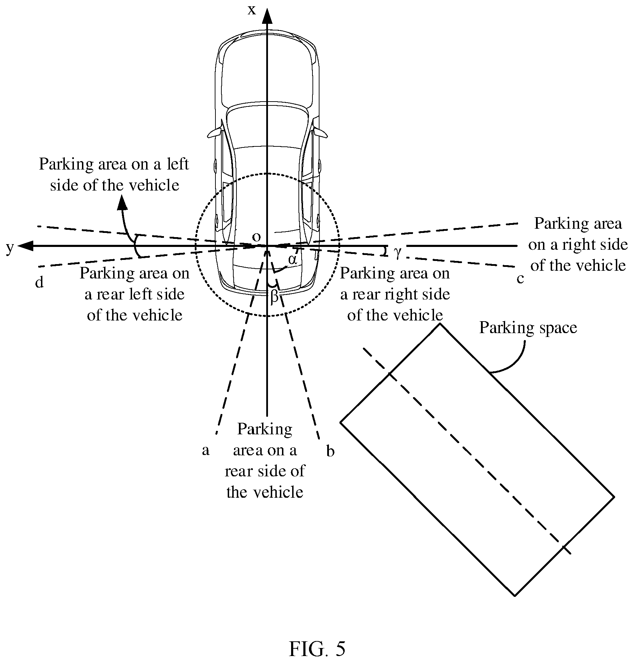

As shown in FIG. 5, a vehicle coordinate system oxy is established by using a rear axle center o of the vehicle as an origin. An area between a straight line oa and a straight line ob is the parking area on the rear side of the vehicle, and both an included angle between the straight line oa and an x-axis and an included angle between the straight line ob and the x-axis are β. An area between a straight line oc and the straight line ob is the parking area on the rear right side of the vehicle, and an included angle between the straight line oc and the straight line ob is α. An area between a straight line od and the straight line oa is the parking area on the rear left side of the vehicle, and an included angle between the straight line od and the straight line oa is α. An area between the straight line od and the straight line oc is the parking area on the left side of the vehicle and the parking area on the right side of the vehicle, and an included angle between the straight line oc and a y-axis is γ. For example, specific values of α, β, and γ may be determined based on a width of the vehicle. For example, α may be a value from 60 (degrees, °) to 75°, β may be a value from 10° to 15°, γ may be a value from 5° to 10°, and a sum of α, β, and γ is 90°.

For example, each parking area includes one or more empty parking spaces, and the relative position relationship may include a position of a midpoint of an outer edge in an opening direction of the empty parking space in the five types of areas.

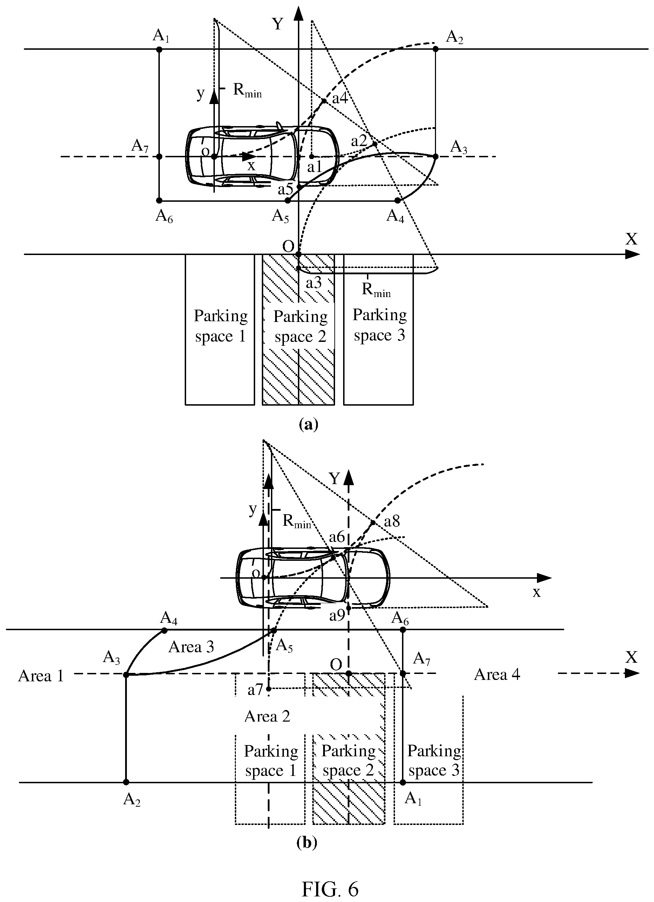

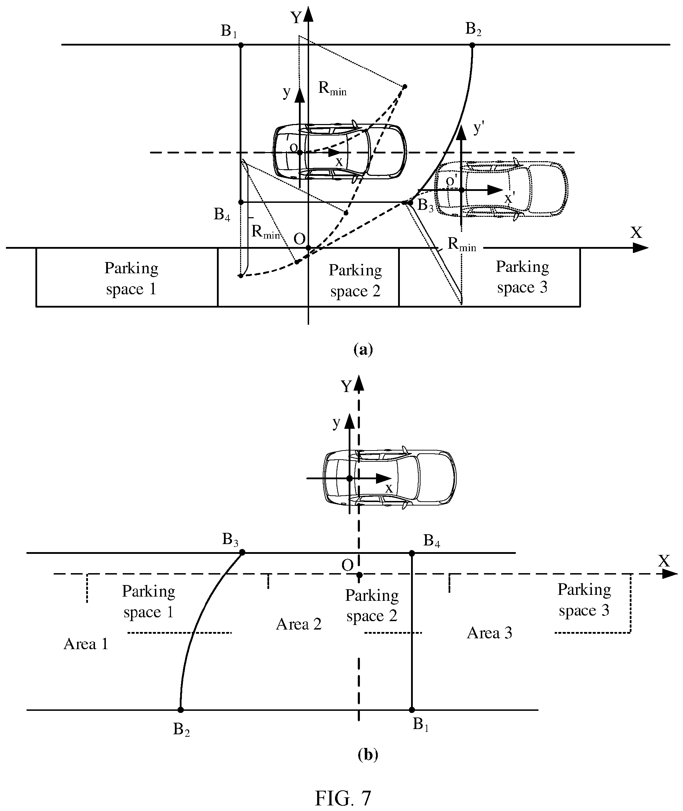

In some possible implementations, each parking area includes one or more empty parking spaces. Further, a first screening area is obtained through division based on position information of the rear axle center (for example, a point o shown in FIG. 6 or FIG. 7) of the vehicle and position information of the midpoint (for example, a point O shown in FIG. 6 or FIG. 7) of the outer edge line in the opening direction of the empty parking space.

For example, when the parking space is located on a side of the vehicle, the first screening area may be obtained through division based on a parking space type. In an example, when the parking space located on the side of the vehicle is a perpendicular parking space, any parking space on the side of the vehicle may be selected to establish a parking space coordinate system. As shown in (a) in FIG. 6, a parking space coordinate system OXY is established by using a parking space 2 as a reference. In the coordinate system, an area $A_1$-$A_2$-$A_3$-$A_5$-$A_6$-$A_7$-$A_1$ and an area $A_3$-$A_4$-$A_5$ are defined. It is known that a front overhang, a rear overhang, a wheelbase, and the vehicle width of the vehicle are respectively $L_f$, $L_r$, $L$, and $W$, a minimum steering radius corresponding to the rear axle center of the vehicle is $R_{min}$, and a parking space width is $W_d$, and $h_1 = (W_d - W)/2$ is defined. In this case, boundaries of the area shown in (a) in FIG. 6 may be expressed as follows:

An equation of an arc segment boundary $A_3A_5$ relative to the parking space coordinate system OXY is expressed as follows:

$$\left(x^s_{A_3A_5} - R_{min}\right)^2 + \left(y^s_{A_3A_5} + R_{min} + \sqrt{2h_1\left(R_{min} - W/2\right) - h_1^2}\right)^2 = 4R_{min}^2;$$

an equation of an arc segment boundary $A_3A_4$ relative to the parking space coordinate system OXY is expressed as follows:

$$\left(x^s_{A_3A_4} - W - h_1/2\right)^2 + \left(y^s_{A_3A_4} - R_{min}\right)^2 = \left(R_{min} - W/2\right)^2;$$

an equation of a straight line segment boundary $A_1A_2$ relative to the parking space coordinate system OXY is expressed as follows:

$$y^s_{A_1A_2} = L_{max};$$

an equation of a straight line segment boundary $A_2A_3$ relative to the parking space coordinate system OXY is expressed as follows:

$$x^s_{A_2A_3} = R_{min};$$

an equation of a straight line segment boundary $A_4A_6$ relative to the parking space coordinate system OXY is expressed as follows:

$$y_{A_4A_6}^s = L_{\min} ;$$

and

an equation of a straight line segment boundary $A_1A_6$ relative to the parking space coordinate system OXY is expressed as follows:

$$x_{A_1A_6}^s = -R_{\min} - W - 2h_1 .$$

Herein, $L_{\max}$ is a maximum distance that can be sensed by a sensing system of the vehicle. For example, $L_{\max}$ may be a value from 6 meters to 8 meters. A specific value of $L_{\max}$ may be determined based on a sensing capability of the sensing system of the vehicle. Herein, $L_{\min}$ is a minimum distance for ensuring accuracy of the sensing system of the vehicle and/or a minimum distance for ensuring parking safety of the vehicle. For example, $L_{\min}$ may be a value from 0.3 meters to 0.5 meters. A specific value of $L_{\min}$ may be determined by comprehensively considering accuracy of the sensing system and parking safety of the vehicle.

Further, through center coordinate transformation, it may be obtained that an equation of the arc segment boundary $A_3A_5$ relative to the vehicle coordinate system oxy is as follows:

$$\left(x_{A_3A_5}^v + R_{\min}\right)^2 + \left(y_{A_3A_5}^v - R_{\min} - \sqrt{2h_1\left(R_{\min} - W/2\right) - h_1^2}\right)^2 = 4R_{\min}^2 ;$$

an equation of the arc segment boundary $A_3A_4$ relative to the vehicle coordinate system oxy is expressed as follows:

$$\left(x_{A_3A_4}^v + W + h_1/2\right)^2 + \left(y_{A_3A_4}^v + R_{\min}\right)^2 = \left(R_{\min} - W/2\right)^2 ;$$

an equation of the straight line segment boundary $A_1$-$A_2$ relative to the vehicle coordinate system oxy is expressed as follows:

$$y_{A_1A_2}^v = -L_{\max} ;$$

an equation of the straight line segment boundary $A_2A_3$ relative to the vehicle coordinate system oxy is expressed as follows:

$$x_{A_2A_3}^v = -R_{\min} ;$$

an equation of the straight line segment boundary $A_4A_6$ relative to the vehicle coordinate system oxy is expressed as follows:

$$y_{A_4A_6}^v = -L_{\min} ;$$

and

an equation of the straight line segment boundary $A_1A_6$ relative to the vehicle coordinate system oxy is expressed as follows:

$$x_{A_1A_6}^v = R_{\min} + W + 2h_1 .$$

Specifically, positions of the area $A_1$-$A_2$-$A_3$-$A_5$-$A_6$-$A_7$-$A_1$ and the area $A_3$-$A_4$-$A_5$ in the vehicle coordinate system oxy may be shown in (b) in FIG. 6. An area formed by $A_1$-$A_2$-$A_3$-$A_5$-$A_6$-$A_7$-$A_1$ is an area 2, an area formed by $A_3$-$A_4$-$A_5$ is an area 3, an area on a left side of $A_2$-$A_3$-$A_4$ is an area 1, and an area on a right side of $A_6$-$A_7$-$A_1$ is an area 4. When the midpoint of the outer edge line in the opening direction of the empty parking space is located in the area 1, parking into the parking space can be implemented through one gear change; when the midpoint of the outer edge line in the opening direction of the empty parking space is located in the area 2, parking into the empty parking space can be implemented through two gear changes; when the midpoint of the outer edge line in the opening direction of the empty parking space is located in the area 3, parking into the empty parking space can be implemented through three gear changes; or when the midpoint of the outer edge line in the opening direction of the empty parking space is located in the area 4, the vehicle needs to drive forward, and can park into the empty parking space only when the empty parking space is located in any one of the areas 1 to 3. For example, as shown in FIG. 6, a parking space 1 and the parking space 2 are located in the area 2, and a parking space 3 is located in the area 4.

It may be understood that the "gear change" may be a process in which the vehicle parks from a current position into a parking area. For example, in a process in which a user makes a shift to a reverse (reverse, R) gear to park the vehicle into a parking area, if the user can directly park the vehicle into the parking area in the R gear, it may indicate that the user can complete parking through one gear change. If the user cannot directly park the vehicle into the parking area after making a shift to the R gear, and further needs to switch from the R gear to a drive (drive, D) gear and drive the vehicle for a distance, and then switch from the D gear to the R gear to park the vehicle into the parking area, it may indicate that the user completes parking through two gear changes. By analogy, a larger number of times the user switches between the D gear and the R gear may indicate a larger number of gear changes by the user.

In another example, when the parking space located on the side of the vehicle is a parallel parking space, any parking space on the side of the vehicle may be selected to establish a parking space coordinate system. As shown in (a) in FIG. 7, a parking space coordinate system OXY is established by using a parking space 2 as a reference. In the coordinate system, an area $B_1$-$B_2$-$B_3$-$B_4$ is defined. In this case, boundaries of the area shown in (a) in FIG. 7 may be expressed as follows:

An equation of a straight line segment boundary $B_1B_2$ relative to the parking space coordinate system OXY is expressed as follows:

$$y^s_{B_1B_2} = L_{\max} ;$$

an equation of an arc segment boundary $B_2B_3$ relative to the parking space coordinate system OXY is expressed as follows:

$$\left( x^s_{B_2B_3} + \sqrt{\left(L+L_f\right)^2 + 2R_{\min}W}\Big/2 - L_r/2 \right)^2 + \left( y^s_{B_2B_3} - 2R_{\min} + W/2 \right)^2 = \left(2R_{\min}\right)^2 ;$$

an equation of a straight line segment boundary $B_3B_4$ relative to the parking space coordinate system OXY is expressed as follows:

$$y^s_{B_3B_4} = L_{\min} ;$$

and

an equation of a straight line segment boundary $B_1B_4$ relative to the parking space coordinate system OXY is expressed as follows:

$$x^s_{B_1B_4} = -\sqrt{\left(L+L_f\right)^2 + 2R_{\min}W}\Big/2 + L_r/2 .$$

Further, through center coordinate transformation, it may be obtained that an equation of the straight line segment boundary $B_1B_2$ relative to the vehicle coordinate system oxy is expressed as follows:

$$y^v_{B_1B_2} = -L_{\max} ;$$

an equation of the arc segment boundary $B_2B_3$ relative to the vehicle coordinate system oxy is expressed as follows:

$$\left( x^{v}_{B_2B_3} - \sqrt{\left(L+L_f\right)^2 + 2R_{\min}W}\Big/2 + L_r/2 \right)^2 + \left( y^{v}_{B_2B_3} + 2R_{\min} - W/2 \right)^2 = \left(2R_{\min}\right)^2 ;$$

an equation of the straight line segment boundary $B_3B_4$ relative to the vehicle coordinate system oxy is expressed as follows:

$$y^{v}_{B_3B_4} = -L_{\min} ;$$

and

an equation of the straight line segment boundary $B_1B_4$ relative to the vehicle coordinate system $O_vX_vY_v$ is expressed as follows:

$$x^{v}_{B_1B_4} = \sqrt{\left(L+L_f\right)^2 + 2R_{\min}W}\Big/2 - L_r/2 .$$

Specifically, a position of the area $B_1$-$B_2$-$B_3$-$B_4$ in the vehicle coordinate system oxy may be shown in (b) in FIG. 7. An area formed by $B_1$-$B_2$-$B_3$-$B_4$ is an area 2, an area on a left side of $B_2$-$B_3$ is an area 1, and an area on a right side of $B_1$-$B_4$ is an area 3. In a scenario in which the vehicle parks into a parking space in an R gear, when the midpoint of the outer edge line in the opening direction of the empty parking space is located in the area 1, parking into the parking space can be implemented through one gear change; when the midpoint of the outer edge line in the opening direction of the empty parking space is located in the area 2, parking into the empty parking space can be implemented through two gear changes; or when the midpoint of the outer edge line in the opening direction of the empty parking space is located in the area 3, the vehicle needs to drive forward, and can park into the empty parking space only when the empty parking space is located in the area 1 or the area 2. For example, as shown in FIG. 7, a parking space 1 is located in the area 1, the parking space 2 is located in the area 2, and a parking space 3 is located in the area 3.

For example, the first screening area may include the area 2 and the area 3 shown in (b) in FIG. 6, or may include the area 2 shown in (b) in FIG. 7. Further, the relative position relationship may include a position of the empty parking space relative to the first screening area. For example, it is determined whether the empty parking space is located in the area 2 or the area 3 shown in (b) in FIG. 6, it is determined, if the empty parking space is not located in the area 2 or the area 3, whether the empty parking space is located in the area 1, and so on; or it is determined whether the empty parking space is located in the area 2 shown in (b) in FIG. 7, it is determined, if the empty parking space is not located in the area 2, whether the empty parking space is located in the area 1, and so on.

S403: Determine, based on the relative position relationship, a difficulty coefficient for parking the vehicle into each parking area.

In some possible implementations, a difficulty coefficient for parking into a parking area may be measured based on the number of gear changes. A larger number of gear changes indicates a higher difficulty of parking into the parking area and a corresponding larger difficulty coefficient.

For example, the number of gear changes may be determined based on a position of the parking area relative to the first screening area in S402, and then the difficulty coefficient may be determined based on the number of gear changes.

For example, Table 1 shows a relationship between the number of gear changes and the difficulty coefficient.

Table 1

| Number of gear changes | Difficulty coefficient |
|------------------------|------------------------|
| 1 | 0 |
| 2 | 0.2 |
| 3 | 0.4 |
| ... | ... |

In some possible implementations, when the numbers of gear changes required for parking into two parking spaces are the same, the difficulty coefficient may be further determined based on a lateral space required for parking. For example, when there is a short distance between parking areas on two sides of the vehicle, if a larger lateral space is required for parking, it may be considered that the difficulty coefficient for parking is larger. For example, the parking scenario shown in FIG. 3 is used as an example. When the vehicle 301 is located at the position a, there is a short distance between the parking area 310 and the parking area 320. In a process of parking the vehicle 301 into a parking space, a lateral space required for parking needs to be minimized.

With reference to FIG. 6, the following describes a relationship between the lateral space required for parking and the relative position relationship between the vehicle and the parking area.

For example, the parking scenario shown in FIG. 6 is used as an example. For an empty parking space located in the area 2, when the empty parking space is located on a right side of the x-axis of the vehicle coordinate system, a longer lateral distance between an origin of a parking space coordinate system of the empty parking space and the rear axle center of the vehicle indicates a larger lateral space required in a parking process.

For example, as shown in (a) in FIG. 6, when parking from the current position shown in the figure into the parking space 2, the vehicle needs to drive from a point o to a point a4 along an arc *oa*4, then drive from the point a4 to a point a5 along an arc *a*4*a*5, and then park into the parking space 2 along a Y-axis. When parking from a1 shown in the figure into the parking space 2, the vehicle needs to drive from the point a1 to a point a2 along an arc *a*1*a*2, then drive from the point a2 to a point a3 along an arc *a*2*a*3, and then park into the parking space 2 along the Y-axis. It may be learned that compared with a2, a4 is farther away from an outer edge line in an opening direction of the parking space. That is, when the parking space is located on a right side of the vehicle coordinate system, a longer lateral distance between the origin of the parking space coordinate system of the parking space and the rear axle center of the vehicle indicates a larger lateral space required in the parking process.

For another example, as shown in (b) in FIG. 6, both the parking space 1 and the parking space 2 are located on a right side of the x-axis of the vehicle coordinate system, and a lateral distance between an origin of a parking space coordinate system of the parking space 2 and the rear axle center of the vehicle is longer than that of the parking space 1. When parking from the current position shown in the figure into the parking space 2, the vehicle needs to drive from a point o to a point a8 along an arc *oa*8, then drive from the point a8 to a point a9 along an arc *a*8*a*9, and then park into the parking space 2 along a Y-axis of the parking space 2. When parking from the current position shown in the figure into the parking space 1, the vehicle needs to drive from a point o to a point a6 along an arc *oa*6, then drive from the point a6 to a point a7 along an arc *a*6*a*7, and then park into the parking space 1 along a Y-axis of the parking space 1. It may be learned that compared with a6, a8 is farther away from an outer edge line in an opening direction of the parking space. That is, when the parking space is located on a right side of the vehicle coordinate system, a longer lateral distance between the origin of the parking space coordinate system of the parking space and the rear axle center of the vehicle indicates a larger lateral space required in the parking process.

By analogy, when the empty parking space is located on a left side of the x-axis of the vehicle coordinate system, a longer lateral distance between an origin of a parking space coordinate system of the empty parking space and the rear axle center of the vehicle indicates a smaller lateral space required in a parking process.

For example, the lateral space required for parking is defined as a distance between a farthest position to which the vehicle drives in the parking process and a straight line on which the x-axis of the vehicle is located when parking starts, for example, a distance between the x-axis and each of a2, a4, a6, and a8 in FIG. 6.

For example, Table 2 shows a relationship between the lateral space required for parking and the difficulty coefficient.

Table 2

| Lateral space required for parking | Difficulty coefficient |
|---|---|
| 0 meters | Difficulty coefficient corresponding to the number of gear changes * 1 |
| 0.25 times the vehicle width | Difficulty coefficient corresponding to the number of gear changes * 1.2 |
| 0.8 times the vehicle width | Difficulty coefficient corresponding to the number of gear changes * 1.4 |
| ... | ... |

It should be noted that the correspondence between the difficulty coefficient and each of the number of gear changes and the lateral space required for parking shown in Table 1 and Table 2 is merely an example for description. In a specific implementation process, there may be another correspondence between the difficulty coefficient and each of the number of gear changes and the lateral space required for parking. In addition, in some other implementations, the difficulty coefficient for parking may be further determined based on another indicator in the parking process.

In some possible implementations, the relative position relationship includes distance information between the vehicle and each parking area and included angle information between a driving direction of the vehicle and a central axis of each parking area; and the determining, based on the relative position relationship, a difficulty coefficient for parking the vehicle into each parking area may include: determining the difficulty coefficient based on the distance information and the included angle information.

For example, if the parking area includes one or more empty parking spaces, the distance information between the vehicle and the parking area includes a distance between the rear axle center of the vehicle and a midpoint of an outer edge line in an opening direction of the empty parking space.

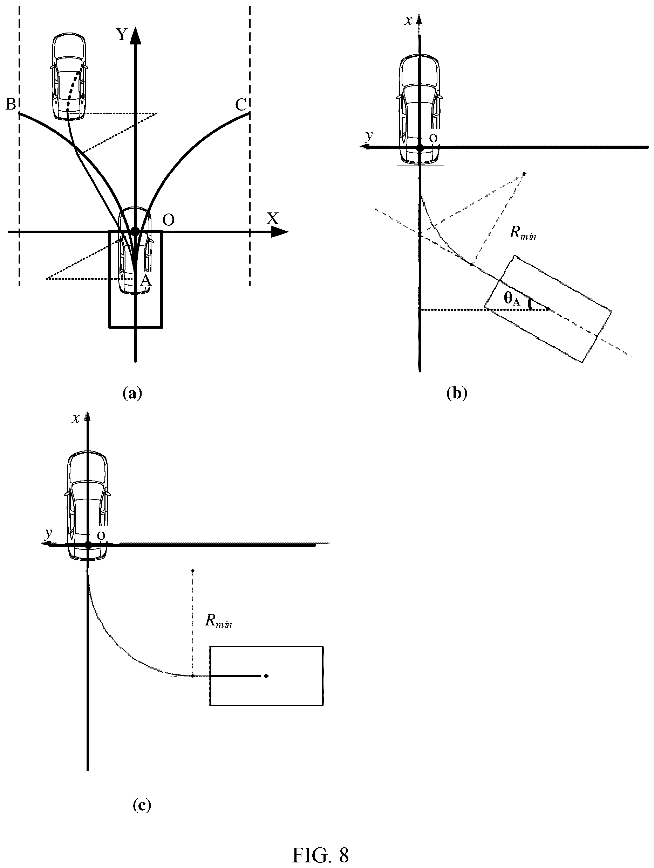

For example, the difficulty coefficient may be determined based on a position of the parking area in the five types of areas in S402, the distance information between the parking area and the vehicle, and the included angle information. With reference to FIG. 8, the following describes, by using an example, a method for determining the difficulty coefficient based on the distance information and the included angle information.

As shown in (a) in FIG. 8, when the parking area is located behind the vehicle, and an included angle between the driving direction of the vehicle and the central axis of the parking area is zero (that is, an example of the parking area on the rear side of the vehicle shown in FIG. 5), if the rear axle center of the vehicle is located in an area formed by an arc segment boundary $AB$ and arc segment boundaries $AC$, $x_B$, and $x_C$, the vehicle can park into the parking area through one gear change, and the difficulty coefficient is small, for example, may be 0 (based on content shown in Table 1). Otherwise, the vehicle needs two or more gear changes to park into the parking area, and the difficulty coefficient is large. Equations of the arc segment boundary $AB$ and the arc segment boundaries $AC$, $x_B$, and $x_C$ relative to the parking space coordinate system OXY are expressed as follows:

$$\left(x_{AB} + 2R_{\min}\right)^2 + \left(y_{AB} + S_1\right)^2 = \left(2R_{\min}\right)^2;$$

$$\left(x_{AC} - 2R_{\min}\right)^2 + \left(y_{AC} + S_1\right)^2 = \left(2R_{\min}\right)^2;$$

$$x_B = -2W_{\mathrm{d}};$$

and

$$x_C = 2W_{\mathrm{d}}.$$

Herein, S1 is half of a parking space length.

As shown in (b) in FIG. 8, when the parking area is located on the rear side of the vehicle, and an included angle between the driving direction of the vehicle and the central axis of the parking area is $\theta_A$ (that is, an example of the parking area on the rear right side of the vehicle shown in FIG. 5), if a central point pose $(x_A, y_A, \theta_A)$ of the parking area in the vehicle coordinate system oxy meets the following inequality constraint, the vehicle can park into the parking area through one gear change, and the difficulty coefficient is small, for example, may be 0 (based on content shown in Table 1). Otherwise, the vehicle needs two or more gear changes to park into the parking area, and the difficulty coefficient is large. The inequality is as follows:

$$\begin{cases} -x_A + y_A/\tan\theta_A > R_{\min}\tan\left(\theta_A/2\right) \\ -y_A/\tan\theta_A > R_{\min}\tan\left(\theta_A/2\right)\cos\theta_A \end{cases}.$$

As shown in (c) in FIG. 8, when the parking area is located on the rear side of the vehicle, and an included angle between the driving direction of the vehicle and the central axis of the parking area is 90°, if a central point position $(x_A, y_A)$ of the parking area in the vehicle coordinate system oxy meets the following inequality constraint, the vehicle can park into the parking area through one gear change, and the difficulty coefficient is small, for example, may be 0 (based on content shown in Table 1). Otherwise, the vehicle needs two or more gear changes to park into the parking area. The inequality is as follows:

$$\begin{cases} x_A \leq -R_{min} \\ y_A \leq -R_{min} \end{cases}.$$

S404: Determine a first parking area as a target park-in area based on the relative position relationship and the difficulty coefficient, where the plurality of parking areas include the first parking area.

In some possible implementations, a priority is determined based on the relative position relationship and the difficulty coefficient, and a parking area with a highest priority in all the parking areas is determined as a target parking area.

For example, Table 3 shows a correspondence between the priority and both the relative position relationship and the difficulty coefficient. A larger value in a "priority" column indicates a lower priority, that is, a parking area whose priority is "1" has a highest priority. In addition, the relationship shown in Table 3 is determined based on a right-side passing principle of vehicles. The "parking area on the rear side of the vehicle", the "parking area on the rear right side of the vehicle", the "parking area on the right side of the vehicle", the "parking area on the rear left side of the vehicle", and the "parking area on the left side of the vehicle" may be parking areas obtained through division in the manner shown in FIG. 5. The "right side of the vehicle" may be a side of a negative half axis of the y-axis of the vehicle coordinate system. It may be learned from Table 3 that priorities of parking areas are: parking area that is on the rear side of the vehicle and into which parking can be implemented through one gear change > parking area that is on the rear right side of the vehicle and into which parking can be implemented through one gear change > parking area that is on the right side of the vehicle and into which parking can be implemented through one gear change > parking area that is on the rear left side of the vehicle and into which parking can be implemented through one gear change > parking area that is on the left side of the vehicle and into which parking can be implemented through one gear change > parking area that is on the right side of the vehicle and into which parking can be implemented through two or more gear changes. Herein, ">" indicates a ranking of a priority, and a priority of a parking area on a left side of ">" is higher than a priority of a parking area on a right side of ">".

Table 3

| Relative position relationship | Difficulty coefficient | Priority |
|---|---|---|
| Parking area located on the rear side of the vehicle | 0 | 1 |
| Parking area located on the rear right side of the vehicle | 0 | 2 |
| Parking area located on the right side of the vehicle | 0 | 3 |
| Parking area located on the rear left side of the vehicle | 0 | 4 |
| Parking area located on the left side of the vehicle | 0 | 5 |
| Located on the right side of the vehicle | 0.2 | 6 |
| Located on the right side of the vehicle | 0.4 | 7 |
| ... | ... | ... |

When at least two of the plurality of parking areas are located on a same side of the vehicle, and when difficulty coefficients are the same, a priority of a parking area whose central axis is perpendicular to a central axis of the vehicle is higher than a priority of a parking area whose central axis is parallel to the central axis of the vehicle. As shown in Table 4, for example, the "same side of the vehicle" is the right side of the vehicle. When an included angle between the central axis of the parking area and the central axis of the vehicle is 90°, the priority is 2.1; when an included angle between the central axis of the parking area and the central axis of the vehicle is between 0° and 90°, the priority is 2.2; or when an included angle between the central axis of the parking area and the central axis of the vehicle is 0°, the priority is 2.3. It may be understood that a larger value in a "priority" column indicates a lower priority. It should be noted that the relationship shown in Table 4 is determined based on the right-side passing principle of vehicles.

Table 4

| Relative position relationship | Difficulty coefficient | Included angle between the central axis of the parking area and the central axis of the vehicle (briefly referred to as an included angle below) | Priority |
|---|---|---|---|
| Located on the right side of the vehicle | 0 | 90° | 2.1 |
| Located on the right side of the vehicle | 0 | (0°, 90°) | 2.2 |

18

(continued)

| Relative position relationship | Difficulty coefficient | Included angle between the central axis of the parking area and the central axis of the vehicle (briefly referred to as an included angle below) | Priority |
|---|---|---|---|
| Located on the right side of the vehicle | 0 | 0° | 2.3 |
| Located on the right side of the vehicle | 0.2 | 90 degrees | 4.1 |
| Located on the right side of the vehicle | 0.2 | 0 degrees | 4.2 |
| | ... | | ... |

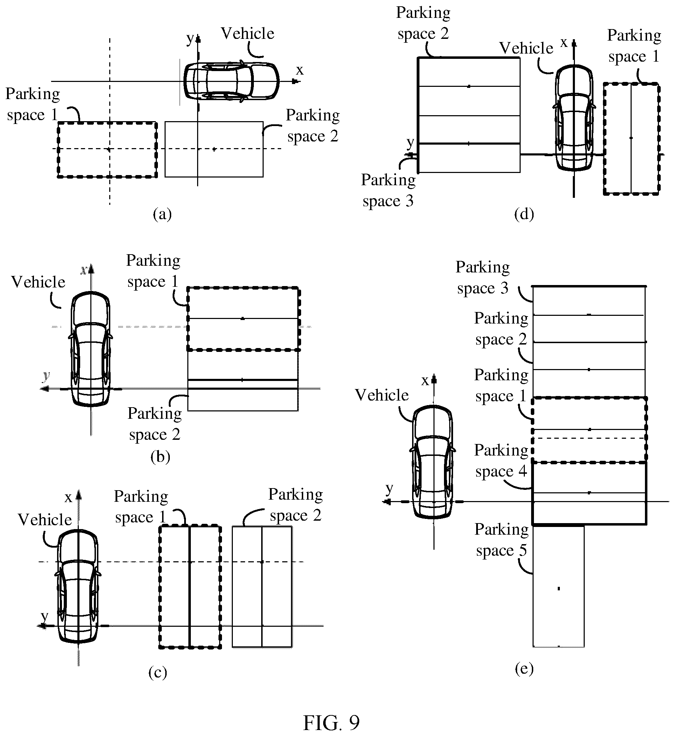

For example, with reference to FIG. 9, the following describes, by using an example, a method for determining the first parking area as the target park-in area based on the relative position relationship and the difficulty coefficient in the right-side passing principle of vehicles. The first parking area may include a parking space 1 shown in FIG. 9.

As shown in (a) in FIG. 9, if the plurality of parking areas include the parking space 1 and a parking space 2 that are located on the right side of the vehicle, one gear change is required to park into the parking space 1, and two or more gear changes are required to park into the parking space 2, the parking space 1 that needs a less number of gear changes is determined as the target park-in area.

As shown in (b) and (c) in FIG. 9, if the plurality of parking areas include the parking space 1 and a parking space 2 that are located on the right side of the vehicle, and when difficulty coefficients for parking into the parking space 1 and the parking space 2 are the same, the parking space 1 closer to a front row of the vehicle is determined as the target park-in area. It may be understood that there is a short visual distance between the parking space 1 and a driver, and the parking space 1 is selected as the target park-in area, so that parking area selection is more humanized.

As shown in (d) in FIG. 9, when the plurality of parking areas include a parking space 2 and a parking space 3 that are located on the left side of the vehicle, and the parking space 1 located on the right side of the vehicle, and when two or more gear changes are required to park into each of the parking space 1, the parking space 2, and the parking space 3, the parking space 1 located on the right side of the vehicle is determined as the target park-in area. A parking area on the right side of the vehicle is selected as the target park-in area, to be in line with a driver habit and a related traffic rule.

As shown in (e) in FIG. 9, if the plurality of parking areas include the parking space 1 to a parking space 5 that are located on the right side of the vehicle, when a same number of gear changes is required to park the vehicle into the parking space 1, the parking space 4, and the parking space 5, the perpendicular parking space 1 closer to a front row of the vehicle is selected as the target park-in area. In a manual parking process, it is easier to park into a perpendicular parking space than to park into a parallel parking space. Therefore, in a scenario with the parallel parking space and the perpendicular parking space, the perpendicular parking space is preferentially selected as the target park-in area, to be more in line with a driver habit.

It should be noted that in this embodiment of this application, an example in which a driver seat of the vehicle is located on the left side of the vehicle is used to describe a method for determining the target park-in area. The method in this embodiment of this application may also be applied to a vehicle whose driver seat is located on a right side. In a specific implementation process, when the driver seat of the vehicle is located on the right side of the vehicle, that is, the vehicle drives based on a left-side passing rule, the target parking area may be determined with reference to the foregoing method.

According to the automatic parking method provided in this embodiment of this application, an appropriate parking area may be selected as the target park-in area based on a relative position relationship between the vehicle and a parking area and a difficulty coefficient for parking the vehicle into the parking area. This makes parking area selection more humanized, and helps improve automatic parking efficiency.

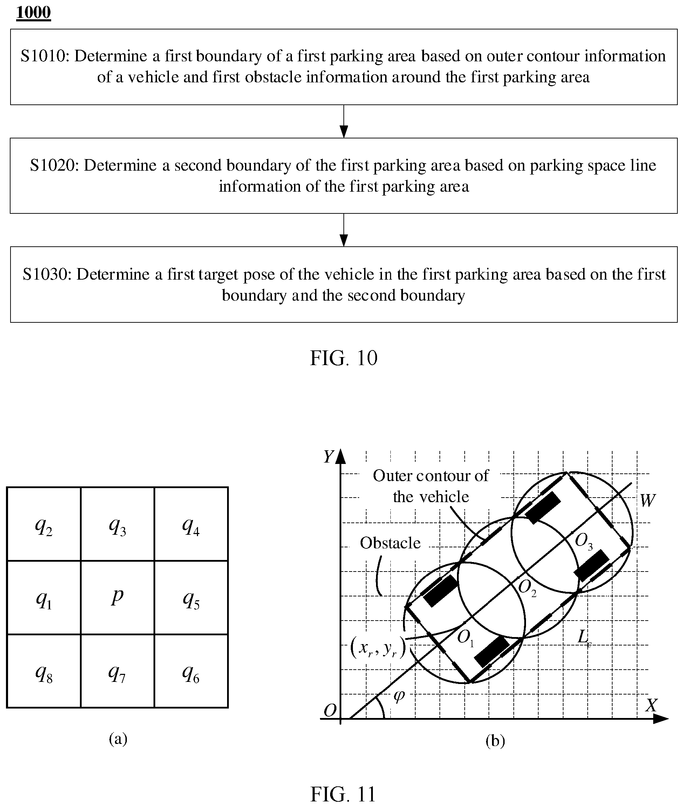

FIG. 10 is a schematic flowchart of an automatic parking method 1000 according to an embodiment of this application. The method 1000 may be performed by the vehicle 100 shown in FIG. 1. More specifically, the method 1000 may be performed by the computing platform 150 in the vehicle 100. Alternatively, the method 1000 may be performed by the parking pose determining module shown in FIG. 2. For example, the method 1000 may be performed in parallel with the method 400, or may be performed after the method 400. For example, the following provides descriptions by using an example in which the method 1000 is performed by a computing platform in a vehicle. The method 1000 may include S1010 to S1030.

S1010: Determine a first boundary of a first parking area based on outer contour information of the vehicle and first obstacle information around the first parking area.

For example, the first parking area may be the first parking area in the method 400, or may be another parking area.

For example, a grid obstacle map may be scanned by using a neighborhood template of a grid, to obtain a Euclidean distance and an orientation between each grid and a nearest obstacle grid. Further, based on the outer contour information of the vehicle, a Euclidean distance and orientation information of the vehicle relative to a nearest obstacle are obtained by using a vehicle multi-circle envelope obstacle detection algorithm.

For example, a neighborhood template is formed based on a neighboring grid $q \in \{q_1, q_2, ..., q_8\}$ of a grid $p$ shown in (a) in FIG. 11, coordinates of the neighboring grid $q \in \{q_1, q_2, ..., q_8\}$ relative to a nearest obstacle grid are $C(q) = (C_x(q), C_y(q))$, and a squared Euclidean distance of the neighboring grid $q \in \{q_1, q_2, ..., q_8\}$ relative to the nearest obstacle grid may be calculated by using the coordinates. If the grid $p$ is the same as the nearest obstacle grid of the neighboring grid $q \in \{q_1, q_2, ..., q_8\}$, a deviation $d(p,q)$ of a squared Euclidean distance and a deviation $M(p,q)$ of relative coordinates between the grid $p$ and the neighboring grid $q \in \{q_1, q_2, ..., q_8\}$ are as follows:

$$d(p,q) = \begin{cases} 2C_x(q)+1 & \text{if } q \in \{q_1, q_5\} \\ 2C_y(q)+1 & \text{if } q \in \{q_3, q_7\} \\ 2(C_x(q)+C_y(q)+1) & \text{if } q \in \{q_2, q_4, q_6, q_8\} \end{cases};$$

and

$$M(p,q) = \begin{cases} (1,0) & \text{if } q \in \{q_1, q_5\} \\ (0,1) & \text{if } q \in \{q_3, q_7\} \\ (1,1) & \text{if } q \in \{q_2, q_4, q_6, q_8\} \end{cases}.$$

Herein, $f(q)$ represents the squared Euclidean distance of the neighboring grid $q \in \{q_1, q_2, ..., q_8\}$ relative to the nearest obstacle grid, and $f(p)$ and $C(p)$ represent a squared Euclidean distance and relative coordinates of the grid $p$ relative to the nearest obstacle grid. A grid scanning algorithm scans the grid obstacle map for four times by using the neighborhood template: Forward scanning is performed row by row from left to right based on a set $N_1(p) = \{q_1, q_2, q_3, q_4\}$; reverse scanning is performed row by row from right to left based on a set $N_2(p) = \{q_5, q_6, q_7, q_8\}$; forward scanning is performed column by column from top to bottom based on a set $N_3(p) = \{q_3, q_2, q_1, q_8\}$; and reverse scanning is performed column by column from bottom to top based on a set $N_4(p) = \{q_7, q_6, q_5, q_4\}$. In each scanning process, if the squared Euclidean distance $f(q)$ of the neighboring grid $q \in N_i(p), i = 1, 2, 3, 4$ relative to the nearest obstacle grid can decrease the squared Euclidean distance $f(p)$ of the current grid $p$ relative to the nearest obstacle grid, the squared Euclidean distance $f(p)$ and the relative coordinates $C(p)$ of the current grid $p$ relative to the nearest obstacle grid are updated based on the neighboring grid $q \in N_i(p)$, $i = 1, 2, 3, 4$. After the four times of scanning are completed, the Euclidean distance and the orientation between each grid in the grid obstacle map and the nearest obstacle grid may be obtained.

To quickly obtain the Euclidean distance and the orientation information of the vehicle relative to the nearest obstacle, as shown in (b) in FIG. 11, three circles (a circle $O_1$, a circle $O_2$, and a circle $O_3$) with a same radius are used to include an outer contour of the vehicle, and a Euclidean distance and an orientation between the vehicle and a nearest obstacle grid are determined by using information about a grid in a grid obstacle map in which circle centers of the three circles are located. Coordinates of the three circle centers may be deduced from a pose $(x_r(k), y_r(k), p(k))$ of a rear axle center of the vehicle at a moment $k$ are as follows:

$$\begin{bmatrix} x_{O_1}(k) \\ y_{O_1}(k) \end{bmatrix} = \begin{bmatrix} \cos\varphi(k) & -\sin\varphi(k) \\ \sin\varphi(k) & \cos\varphi(k) \end{bmatrix} \begin{bmatrix} L_c/6 - L_r \\ 0 \end{bmatrix} + \begin{bmatrix} x_r(k) \\ y_r(k) \end{bmatrix};$$

$$\begin{bmatrix} x_{O_2}(k) \\ y_{O_2}(k) \end{bmatrix} = \begin{bmatrix} \cos\varphi(k) & -\sin\varphi(k) \\ \sin\varphi(k) & \cos\varphi(k) \end{bmatrix} \begin{bmatrix} L_c/2 - L_r \\ 0 \end{bmatrix} + \begin{bmatrix} x_r(k) \\ y_r(k) \end{bmatrix};$$

and

$$\begin{bmatrix} x_{O_3}(k) \\ y_{O_3}(k) \end{bmatrix} = \begin{bmatrix} \cos\varphi(k) & -\sin\varphi(k) \\ \sin\varphi(k) & \cos\varphi(k) \end{bmatrix} \begin{bmatrix} 5L_c/6 - L_r \\ 0 \end{bmatrix} + \begin{bmatrix} x_r(k) \\ y_r(k) \end{bmatrix}.$$

Herein, $L_c$ is a length of the vehicle.

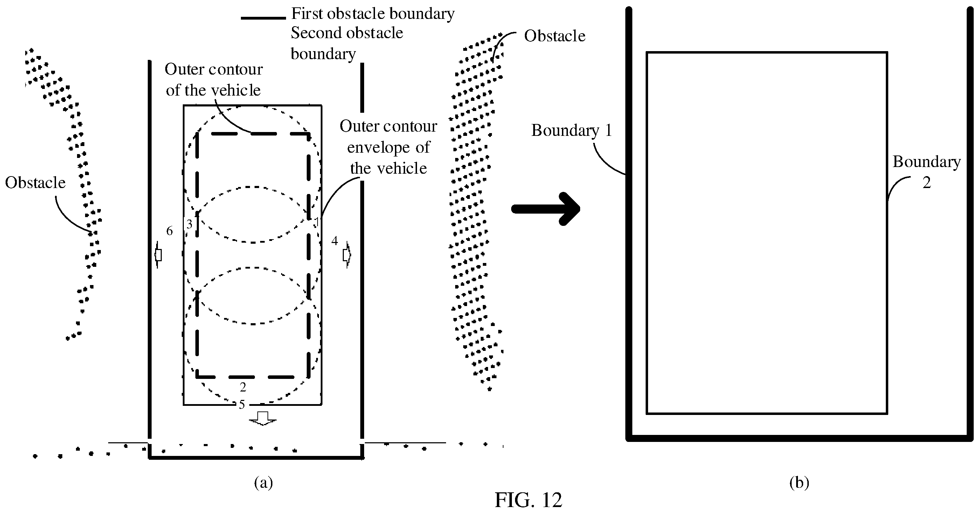

Further, an obstacle boundary, for example, a first obstacle boundary shown in (a) in FIG. 12, around a parking space is sensed based on a sensing system of the vehicle. The boundary is conservative, and may limit a size of the parking area. Therefore, based on the grid obstacle map, the obstacle boundary may be expanded to a second obstacle boundary shown in (a) in FIG. 12. Specifically, an example in which the parking area is a perpendicular parking space is used, and an outer contour envelope of the vehicle is placed within a first obstacle boundary line. If none of the three circles included in the outer contour envelope of the vehicle includes an obstacle point, a side edge and a bottom edge of the outer contour of the vehicle enveloped by the three circles are used as a reference, and iterative expansion is performed based on "right side edge -> bottom edge -> left side edge" until expansion to a position with an obstacle is implemented. In this case, the expanded right side edge-bottom edge-left side edge forms the second obstacle boundary shown in (a) in FIG. 12. Further, the first obstacle boundary and the second obstacle boundary are fused to obtain a boundary 1 shown in (b) in FIG. 12.

For example, the boundary 1 may be a form of the first boundary.

For example, the vehicle drives based on a right-side passing rule. If the parking area is a parallel parking space, a front side, a rear side, and a right side of the outer contour of the vehicle enveloped by the three circles are used as a reference, and iterative expansion is performed based on "right side edge -> bottom edge -> front edge" until expansion to a position with an obstacle is implemented.

It may be understood that the first boundary may be in a shape of the boundary 1 shown in (b) in FIG. 12, or may be in another shape such as an irregular polygon. A specific shape is related to a specific position of an obstacle around the vehicle.

S1020: Determine a second boundary of the first parking area based on parking space line information of the first parking area.

For example, the second boundary may be a parking space line of the first parking area, or may include a parking space line of the first parking area.

For example, the boundary shown in (b) in FIG. 12 may be a form of the second boundary.

It should be understood that in FIG. 12, a form of the first boundary is described by using an example in which the parking area is a perpendicular parking space. First boundaries and second boundaries of the parallel parking space and an angled parking space may also be separately determined by using the foregoing method.

S1030: Determine a first target pose of the vehicle in the first parking area based on the first boundary and the second boundary.

In some possible implementations, the determining a first target pose of the vehicle in the first parking area includes: determining the first target pose based on a first distance, a second distance, and a third distance, where the first distance is a distance between a front side of the vehicle and the first boundary, the second distance is a distance between a body side of the vehicle and the first boundary, and the third distance is a distance between a rear side of the vehicle and the first boundary.

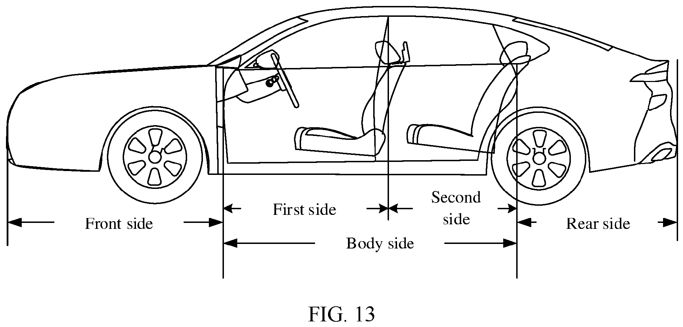

For example, as shown in FIG. 13, the front side of the vehicle may be a part between a vehicle headlight and a position at which a hinge is disposed on a front door of the vehicle; the body side may be a part between the position at which a hinge is disposed on the front door of the vehicle and a position at which a sealing rubber strip is disposed on a rear door of the vehicle, or the body side may be a part at which a space required for the vehicle changes due to opening and closing of a vehicle door; and the rear side may be a part between a position at which a hinge is disposed on the rear door of the vehicle and a vehicle taillight.

In some possible implementations, the body side includes a first side and a second side, the first side corresponds to a cockpit of the vehicle, the second side corresponds to a part other than the cockpit, and the second distance includes a distance between the first side and the first boundary and a distance between the second side and the first boundary.

In FIG. 13, a five-seat vehicle is used as an example for description. This embodiment of this application is not limited thereto. For example, when the vehicle is a seven-seat sport/suburban utility vehicle (sport/suburban utility vehicle, SUV), the first side may be a part between the position at which a hinge is disposed on the front door of the vehicle and a position at which a sealing rubber strip is disposed on the front door of the vehicle, or may be a part at which a space required for the vehicle changes due to opening and closing of the front door of the vehicle; and the second side may be a part other than the first side in the body side.

In some possible implementations, the determined first target pose needs to meet the following condition: The outer contour of the vehicle is within the second boundary, the first distance is less than or equal to a first preset threshold, the second distance is less than or equal to a second preset threshold, and the third distance is less than or equal to a third preset threshold. The third preset threshold is less than or equal to the first preset threshold, and the first preset threshold is less than or equal to the second preset threshold.

In some possible implementations, the determined first target pose needs to meet the following condition: The outer contour of the vehicle is within the second boundary, the first distance is less than or equal to a first preset threshold, the distance between the first side and the first boundary is less than or equal to a fourth preset threshold, the distance between the second side and the first boundary is less than or equal to a second preset threshold, and the third distance is less than or equal to a third preset threshold. The third preset threshold is less than or equal to the first preset threshold, the first preset threshold is less than or equal to the second preset threshold, and the second preset threshold is less than or equal to the fourth preset threshold.

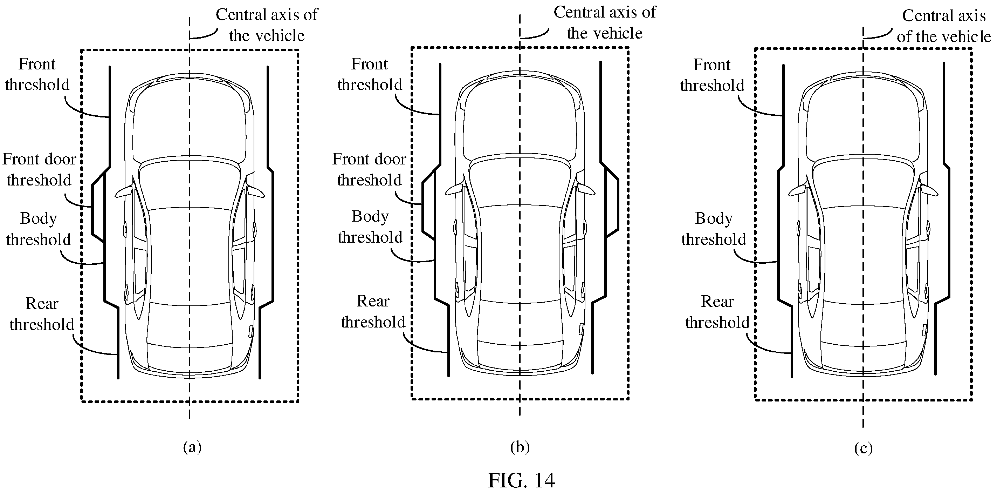

For example, a value relationship between the foregoing preset thresholds may be shown in FIG. 14. The first preset threshold is a front threshold, the second preset threshold is a body threshold, the third preset threshold is a rear threshold, and the fourth preset threshold is a front door threshold.

For example, the first preset threshold may be 29 centimeters, the second preset threshold may be 30 centimeters, the third preset threshold may be 25 centimeters, and the fourth preset threshold may be 45 centimeters. Alternatively, the first preset threshold to the fourth preset threshold may be other values.

In some implementations, the first target pose is determined based on position information of a user in the vehicle, the first boundary, and the second boundary.

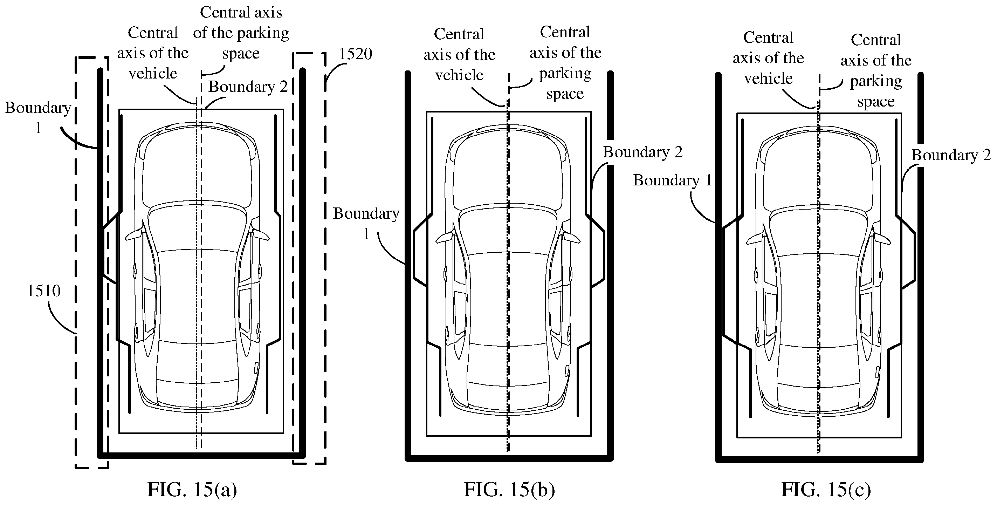

In an example, as shown in FIG. 15(a), when there is a user only in a driver seat of the vehicle and there is no user in a front passenger seat, the first target pose needs to meet the following condition: The outer contour of the vehicle is within a boundary 2, a distance between a front side on a left side of the vehicle and a left edge (an edge 1510) of the boundary 1 is greater than or equal to the first preset threshold, a distance between a first side on the left side of the vehicle and the edge 1510 of the boundary 1 is greater than or equal to the fourth preset threshold, a distance between a second side on the left side of the vehicle and the edge 1510 of the boundary 1 is greater than or equal to the second preset threshold, a distance between a rear side on the left side of the vehicle and the edge 1510 of the boundary 1 is greater than or equal to the third preset threshold, a distance between a front side on a right side of the vehicle and an edge 1520 of the boundary 1 is greater than or equal to the first preset threshold, a distance between a body side on the right side of the vehicle and the edge 1520 of the boundary 1 is greater than or equal to the second preset threshold, and a distance between a rear side on the right side of the vehicle and the edge 1520 of the boundary 1 is greater than or equal to the third preset threshold.

In another example, as shown in FIG. 15(b), when there are users in both a driver seat and a front passenger seat of the vehicle, the first target pose needs to meet the following condition: The outer contour of the vehicle is within a boundary 2, a distance between a front side on a left side of the vehicle and an edge 1510 of the boundary 1 is greater than or equal to the first preset threshold, a distance between a first side on the left side of the vehicle and the edge 1510 of the boundary 1 is greater than or equal to the fourth preset threshold, a distance between a second side on the left side of the vehicle and the edge 1510 of the boundary 1 is greater than or equal to the second preset threshold, a distance between a rear side on the left side of the vehicle and the edge 1510 of the boundary 1 is greater than or equal to the third preset threshold, a distance between a front side on a right side of the vehicle and an edge 1520 of the boundary 1 is greater than or equal to the first preset threshold, a distance between a first side on the right side of the vehicle and the edge 1520 of the boundary 1 is greater than or equal to the fourth preset threshold, a distance between a second side on the right side of the vehicle and the edge 1520 of the boundary 1 is greater than or equal to the second preset threshold, and a distance between a rear side on the right side of the vehicle and the edge 1520 of the boundary 1 is greater than or equal to the third preset threshold.

In another example, as shown in FIG. 15(c), when there are users in all of a driver seat, a front passenger seat, and a rear-row seat corresponding to the driver seat of the vehicle, the first target pose needs to meet the following condition: The outer contour of the vehicle is within a boundary 2, a distance between a front side on a left side of the vehicle and an edge 1510 of the boundary 1 is greater than or equal to the first preset threshold, a distance between a body side on the left side of the vehicle and the edge 1510 of the boundary 1 is greater than or equal to the fourth preset threshold, a distance between a rear side on the left side of the vehicle and the edge 1510 of the boundary 1 is greater than or equal to the third preset threshold, a distance between a front side on a right side of the vehicle and an edge 1520 of the boundary 1 is greater than or equal to the first preset threshold, a distance between a first side on the right side of the vehicle and the edge 1520 of the boundary 1 is greater than or equal to the fourth preset threshold, a distance between a second side on the right side of the vehicle and the edge 1520 of the boundary 1 is greater than or equal to the second preset threshold, and a distance between a rear side on the right side of the vehicle and the edge 1520 of the boundary 1 is greater than or equal to the third preset threshold.

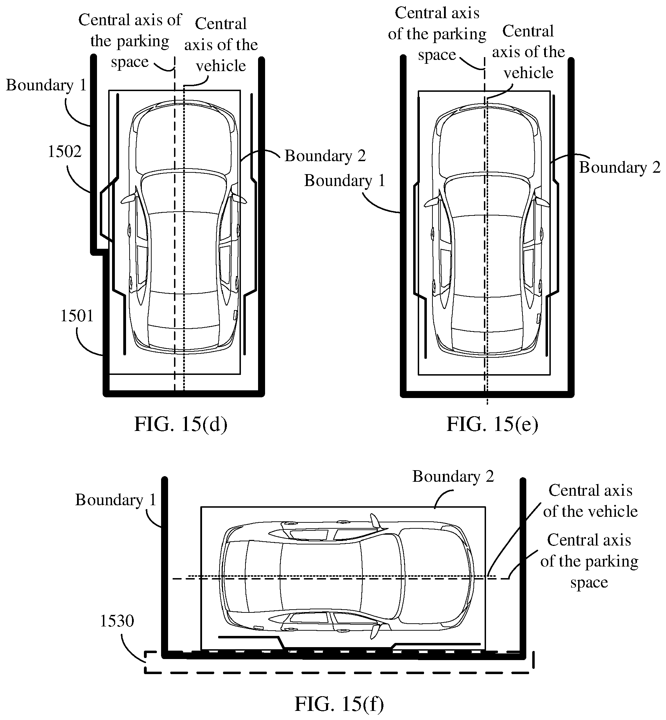

In still another example, the boundary 1 determined by using S 1010 in the method 1000 is an irregular polygon. As shown in FIG. 15(d), a left edge of the boundary 1 is in an irregular shape, 1501 of the boundary 1 coincides with a boundary 2, and there is a distance between 1502 of the boundary 1 and the boundary 2. After the vehicle parks into the parking area based on the determined first target pose, a distance between a second side on a left side of the vehicle and 1501 may be exactly a second preset distance, but a distance between the second side on the left side of the vehicle and 1502 may be far longer than a fourth preset distance.

In some possible implementations, when a width of the boundary 1 and/or a width of the boundary 2 are/is less than a width of a standard parking space, regardless of whether there is a user in the vehicle, the first target pose needs to meet the following condition: The outer contour of the vehicle is within the boundary 2, a distance between a front side on a left side of the vehicle and an edge 1510 of the boundary 1 is greater than or equal to the first preset threshold, a distance between a body side on the left side of the vehicle and the edge 1510 of the boundary 1 is greater than or equal to the second preset threshold, a distance between a rear side on the left side of the vehicle and the edge 1510 of the boundary 1 is greater than or equal to the third preset threshold, a distance between a front side on a right side of the vehicle and an edge 1520 of the boundary 1 is greater than or equal to the first preset threshold, a distance between a body side on the right side of the vehicle and the edge 1520 of the boundary 1 is greater than or equal to the second preset threshold, and a distance between a rear side on the right side of the vehicle and the edge 1520 of the boundary 1 is greater than or equal to the third preset threshold.

For example, the size of the standard parking space in this embodiment of this application may include a size specified in the Specifications for Setting of On-street Parking Spaces on Urban Roads (GA/T 850-2009). Standard parking space sizes are mainly classified into two sizes: large and small. A large parking space is 15600 mm long and 3250 mm wide, and is applicable to medium-sized and large-sized vehicles. A small parking space is 6000 mm long and 2500 mm wide, and is applicable to small-sized vehicles. For an angled parking space (with an angle of 30°, 45°, or 60°), a diagonal length reaches 6000 mm, a width is 2800 mm, and a perpendicular distance between two diagonal lines is 2500 mm.

In FIG. 15(a) to FIG. 15(e), an example in which the parking area is a perpendicular parking space is used for description. In some possible implementations, the first boundary and the second boundary may alternatively be determined based on a parallel parking space. For example, as shown in FIG. 15(f), a boundary 1 may be a form of the first boundary determined based on the parallel parking space, and a boundary 2 may be a form of the second boundary determined based on the parallel parking space. For example, a driving principle of a vehicle on a road is right-side passing. When the vehicle parks into the parallel parking space, a front passenger seat side is close to an edge 1530 of the boundary 2. In an example, when there is no user on the front passenger seat side, the determined first target pose needs to meet the following condition: The outer contour of the vehicle is within the boundary 2, a distance between a front side on a right side of the vehicle and an edge 1530 of the boundary 1 is greater than or equal to the first preset threshold, a distance between a body side on the right side of the vehicle and the edge 1530 of the boundary 1 is greater than or equal to the second preset threshold, and a distance between a rear side on the right side of the vehicle and the edge 1530 of the boundary 1 is greater than or equal to the third preset threshold. In another example, when there is a user on the front passenger seat side, the determined first target pose needs to meet the following condition: The outer contour of the vehicle is within the boundary 2, a distance between a front side on a right side of the vehicle and an edge 1530 of the boundary 1 is greater than or equal to the first preset threshold, a distance between a first side on the right side of the vehicle and the edge 1530 of the boundary 1 is greater than or equal to the fourth preset threshold, a distance between a second side on the right side of the vehicle and the edge 1530 of the boundary 1 is greater than or equal to the second preset threshold, and a distance between a rear side on the right side of the vehicle and the edge 1530 of the boundary 1 is greater than or equal to the third preset threshold.

It may be learned from FIG. 15(a), FIG. 15(b), FIG. 15(c), FIG. 15(d), FIG. 15(e), and FIG. 15(f) that the target park-in pose determined based on the method in this embodiment of this application may not be centered relative to the parking space (in the figure, a central axis of the vehicle does not coincide with a central axis of the parking space).

In some possible implementations, after the first parking area is determined as the target parking area, when the first boundary is greater than or equal to the second boundary, the first target pose is determined based on the first boundary and the second boundary. Otherwise, the target park-in area is reselected.

It should be noted that, that the first boundary is equal to the second boundary may include: The first boundary coincides with the second boundary. That the first boundary is greater than the second boundary may include: The second boundary is within a range included in the first boundary. That the first boundary is greater than or equal to the second boundary may include: The second boundary is within a range included in the first boundary, but a part of the second boundary coincides with a part of the first boundary. For example, as shown in FIG. 15(c), the boundary 2 is within a range included in the boundary 1, and 1501 of the boundary 1 coincides with a part of the boundary 2.

It should be further noted that in this embodiment of this application, an example in which the driver seat of the vehicle is located on the left side of the vehicle is used to describe a method for determining the target park-in pose. The method in this embodiment of this application may also be applied to a vehicle whose driver seat is located on a right side. In a specific implementation process, when the driver seat of the vehicle is located on the right side of the vehicle, that is, the vehicle drives based on a left-side passing rule, the target park-in pose may be determined with reference to the foregoing method.

According to the automatic parking method provided in this embodiment of this application, before the vehicle is controlled to park into the target park-in area, a target pose of the vehicle after parking into the target park-in area may be determined based on obstacle information around the vehicle and parking space line information, so that in a process of parking into the target park-in area, the vehicle does not scrape against an obstacle, and after parking into the target park-in area, the vehicle does not affect passengers in the vehicle and another vehicle in getting on/off the vehicle.

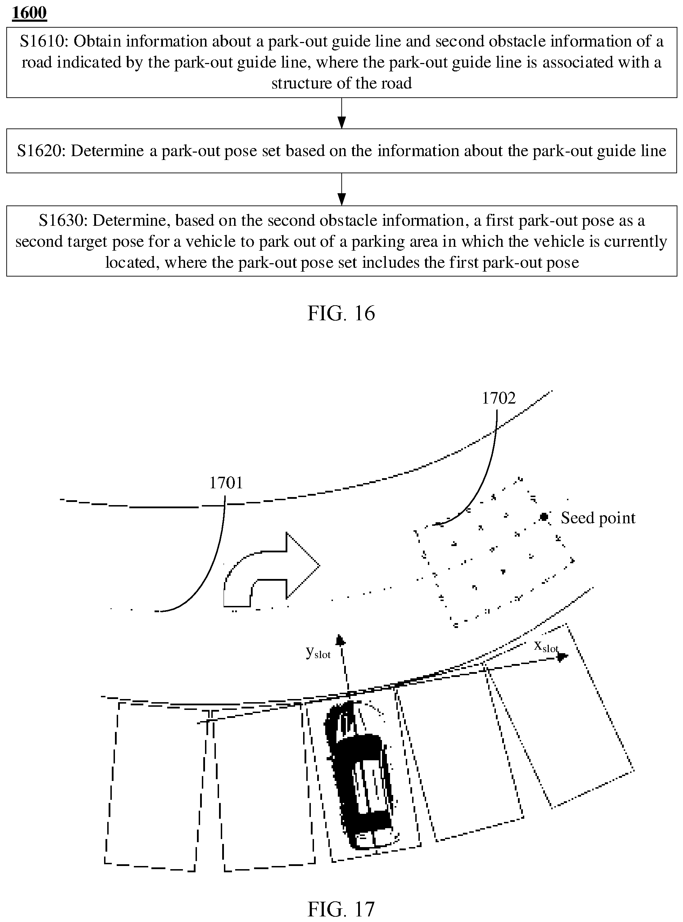

FIG. 16 is a schematic flowchart of an automatic parking method 1600 according to an embodiment of this application. The method 1600 may be performed by the vehicle 100 shown in FIG. 1. More specifically, the method 1600 may be performed by the computing platform 150 in the vehicle 100. Alternatively, the method 1600 may be performed by the parking pose determining module shown in FIG. 2. For example, the method 1600 may be performed after the method 400. For example, the following provides descriptions by using an example in which the method 1600 is performed by a computing platform in a vehicle. The method 1600 may include S1610 to S1630.

S1610: Obtain information about a park-out guide line and second obstacle information of a road indicated by the park-out guide line, where the park-out guide line is associated with a structure of the road.

For example, in the method 400 or the method 1000, if the vehicle parks into the first parking area, a parking area in which the vehicle is currently located includes the first parking area in the foregoing embodiment, or a parking area in which the vehicle is currently located further includes another vehicle parking area.

For example, the park-out guide line may be generated based on a road structure sensed by a sensing system. For example, the park-out guide line may be a dashed line 1701 shown in FIG. 17.

For example, that the park-out guide line is associated with a structure of the road may include one or more of the following: The park-out guide line is a center line of the road; when the road is curved, curvature of the parking guide line is the same as curvature of the road; and when the road is straight, the parking guide line is parallel to the road.

In some possible implementations, before the information about the park-out guide line and the second obstacle information of the road indicated by the park-out guide line are obtained, the park-out guide line is generated based on a user instruction. For example, if it is determined, based on the user instruction, that the vehicle needs to drive to the right, a park-out guide line that directs the vehicle to drive to the right is generated based on the road structure.

For example, the second obstacle information may include obstacle position information on two sides of the park-out guide line.

S1620: Determine a park-out pose set based on the information about the park-out guide line.

For example, a seed point is determined based on the information about the park-out guide line. The seed point may include a position and a posture at which most users habitually park vehicles when controlling the vehicles to park out of parking spaces. The seed point may be determined by using a big data algorithm, or may be determined in another manner.

In some possible implementations, the seed point may meet the following condition: Without considering a position of an obstacle on the road, after the vehicle parks out to the seed point, a pose of the vehicle at the seed point can enable a driving direction of the vehicle to be parallel to a tangent of the road.

Further, an example in which the park-out guide line is the dashed line 1701 shown in FIG. 17 is used. A park-out pose area shown in 1702 is determined based on the seed point, then the park-out pose area 1702 is discretized, and scattered points are traversed starting from the seed point, to obtain the park-out pose set. The set includes one or more park-out poses.

S1630: Determine, based on the second obstacle information, a first park-out pose as a second target pose for the vehicle to park out of the parking area in which the vehicle is currently located, where the park-out pose set includes the first park-out pose.

In some possible implementations, a first set is determined from the park-out pose set based on the second obstacle information, where when the vehicle is at any park-out pose in the first set, the vehicle does not scrape against an obstacle indicated by the second obstacle information; a second set is determined from the first set based on the second obstacle information, where when driving from a current position to any park-out pose in the second set, the vehicle does not scrape against the obstacle indicated by the second obstacle information; and the first park-out pose that is in the second set and that is closest to the second park-out pose is determined as the second target pose.

For example, the second park-out pose may be the seed point.

For example, after the first set is determined from the park-out pose set based on the second obstacle information, feasibility of each park-out pose in the first set is determined based on a super-fast A* detection algorithm and the second obstacle information, and further a feasible first park-out pose that is in the first set and that is closest to the seed point is determined as the second target pose.

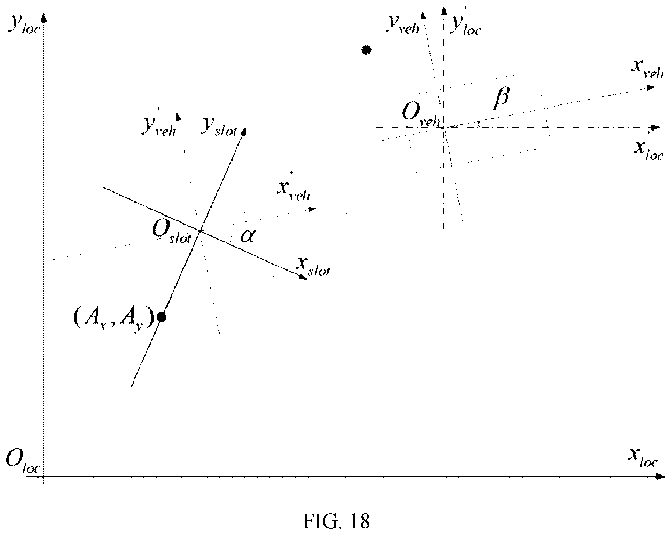

For example, coordinates of each park-out pose in the first set in a parking space coordinate system $O_{slot}x_{slot}y_{slot}$ are determined, and then coordinates of each park-out pose in the park-out pose set in a geodetic coordinate system $O_{loc}x_{loc}y_{loc}$ are determined based on coordinates of the vehicle in the parking space coordinate system $O_{slot}x_{slot}y_{slot}$ and coordinates of the vehicle in the geodetic coordinate system $O_{loc}x_{loc}y_{loc}$. For example, as shown in FIG. 18, if an included angle between a vehicle coordinate system $O_{veh}x_{veh}y_{veh}$ and the geodetic coordinate system $O_{loc}x_{loc}y_{loc}$ is $\beta$, and an included angle between the vehicle coordinate system $O_{veh}x_{veh}y_{veh}$ and the parking space coordinate system $O_{slot}x_{slot}y_{slot}$ is $\alpha$, coordinates of a point $(A_x, A_y)$ in the geodetic coordinate system $O_{loc}x_{loc}y_{loc}$ may be determined based on coordinates $(A_x, A_y)_{O_{loc}x_{loc}y_{loc}}$ of the point $(A_x, A_y)$ in the parking space coordinate system $O_{slot}x_{slot}y_{slot}$ by using the following formula:

$$\begin{bmatrix} A_x \\ A_y \end{bmatrix}_{O_{slot}x'_{veh}y'_{veh}} = \begin{bmatrix} \cos\alpha & \sin\alpha \\ -\sin\alpha & \cos\alpha \end{bmatrix} \begin{bmatrix} A_x \\ A_y \end{bmatrix}_{O_{slot}x_{slot}y_{slot}} ;$$

$$\begin{bmatrix} A_x \\ A_y \end{bmatrix}_{O_{veh}x_{veh}y_{veh}} = \overrightarrow{O_{veh}O_{slot}} + \begin{bmatrix} A_x \\ A_y \end{bmatrix}_{O_{slot}x'_{veh}y'_{veh}} ;$$

$$\begin{bmatrix} A_x \\ A_y \end{bmatrix}_{O_{veh}x'_{loc}y'_{loc}} = \begin{bmatrix} \cos(-\beta) & \sin(-\beta) \\ -\sin(-\beta) & \cos(-\beta) \end{bmatrix} \begin{bmatrix} A_x \\ A_y \end{bmatrix}_{O_{veh}x_{veh}y_{veh}} ;$$

and

$$\begin{bmatrix} A_x \\ A_y \end{bmatrix}_{O_{loc}x_{loc}y_{loc}} = \overrightarrow{O_{loc}O_{veh}} + \begin{bmatrix} A_x \\ A_y \end{bmatrix}_{O_{veh}x'_{loc}y'_{loc}} .$$

After the coordinates of each park-out pose in the geodetic coordinate system are determined, the second target pose is determined from the first set by using the super-fast A* detection algorithm. A park-out pose output by the super-fast A* detection algorithm is a feasible park-out pose. The "feasible" indicates that the obstacle indicated by the second obstacle information does not affect driving of the vehicle from the parking area in which the vehicle is currently located to the park-out pose.

In some possible implementations, the number of search nodes of the super-fast A* detection algorithm may be decreased by discretizing an action set and a space set at a coarse granularity; locating efficiency of a space grid may be improved by using a space grid occupancy detection algorithm with computational complexity of O(1); and a speed at which the super-fast A* detection algorithm converges to a park-out pose may be increased based on an open list deep iteration strategy by using an identified node, to increase result confidence of the super-fast A* detection algorithm.

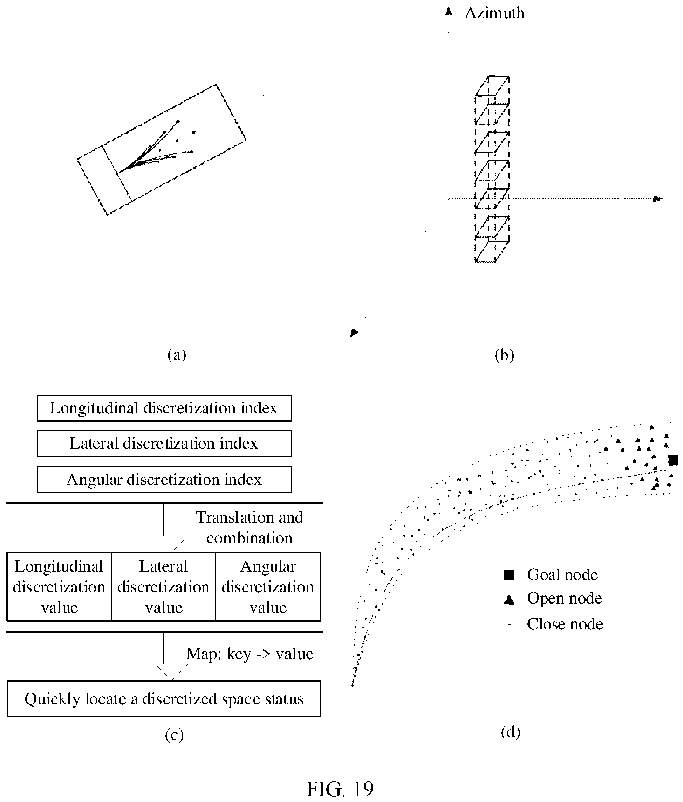

Specifically, as shown in (a) in FIG. 19, the action set is discretized at a coarse granularity, and a search step of the super-fast A* detection algorithm is classified into three modes of SHORT, NORMAL, and LONG by increasing a fixed azimuth increment by a multiple. An azimuth is an azimuth of the vehicle in the geodetic coordinate system. Based on a search direction space and a Euclidean distance between a current search node and a selected park-out pose, switching between the three step modes of SHORT, NORMAL, and LONG is performed in a timely manner, to implement a variable step search manner. For each step mode, based on three types of turning radii, a total of 12 action elements in four directions of left front, right front, left rear, and right rear are given when the vehicle is located at a current position, and a total of two action elements in two directions of forward and backward of current orientation information of the vehicle are added. Therefore, for given current position information of the vehicle, the discretized action set includes a total of 42 action elements.

As shown in (b) in FIG. 19, the space set is discretized at a coarse granularity, longitudinal and lateral dimensions are discretized by using a fixed large step, and an angular dimension of a space is discretized by using a fixed azimuth increment.

As shown in (c) in FIG. 19, a translation and combination operation is performed on a longitudinal discretization index, a lateral discretization index, and an angular discretization index to obtain a key value, and occupancy information of a discretized space grid is quickly identified by using a hash (Hash) table, thereby greatly improving locating efficiency of the space grid.

As shown in (d) in FIG. 19, when converging to a large neighborhood of the park-out pose, the super-fast A* detection algorithm continues to perform iterative search in an allowable time range based on open list information, so that the super-fast A* detection algorithm further converges to a small neighborhood of the park-out pose, to increase the result confidence of the super-fast A* detection algorithm.

According to the automatic parking method provided in this embodiment of this application, a target park-out pose is determined based on road structure information and information about an obstacle on a road, and feasibility of the selected target park-out pose is verified by using a collision detection algorithm and the super-fast A* detection algorithm. This can resolve a problem that the target park-out pose does not match the road structure information and local map obstacle information, and improve operation convenience of the vehicle after a park-out operation is completed.

In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

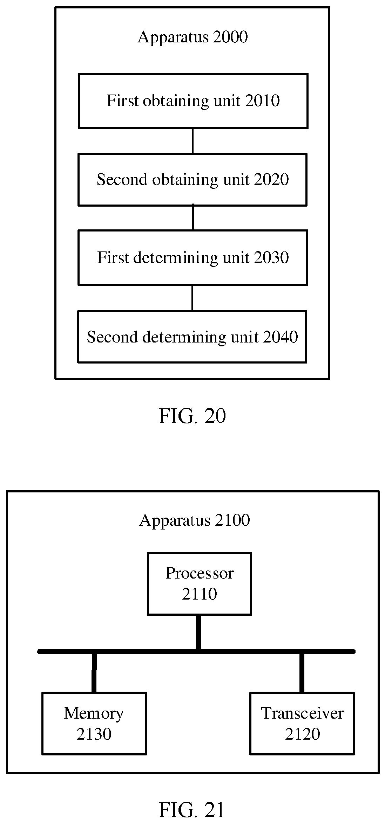

With reference to FIG. 1 to FIG. 19, the foregoing describes in detail the method provided in embodiments of this application. With reference to FIG. 20 and FIG. 21, the following describes in detail an apparatus provided in embodiments of this application. It should be understood that descriptions of the apparatus embodiments correspond to the descriptions of the method embodiments. Therefore, for content that is not described in detail, refer to the foregoing method embodiments. For brevity, details are not described herein again.

FIG. 20 is a block diagram of an automatic parking apparatus 2000 according to an embodiment of this application. The apparatus 2000 includes a first obtaining unit 2010, a second obtaining unit 2020, a first determining unit 2030, and a second determining unit 2040. The first obtaining unit 2010 is configured to obtain information about a plurality of parking areas. The second obtaining unit 2020 is configured to obtain a relative position relationship between a vehicle and each of the plurality of parking areas. The first determining unit 2030 is configured to determine, based on the relative position relationship, a difficulty coefficient for parking the vehicle into each parking area. The second determining unit 2040 is configured to determine a first parking area as a target park-in area based on the relative position relationship and the difficulty coefficient, where the plurality of parking areas include the first parking area.

Optionally, the relative position relationship includes distance information between the vehicle and each parking area and included angle information between a driving direction of the vehicle and a central axis of each parking area; and the first determining unit 2030 is configured to determine the difficulty coefficient based on the distance information and the included angle information.

Optionally, the first determining unit 2030 is configured to: determine a first screening area based on a width of the vehicle, a minimum parking radius of the vehicle, and a relative position relationship between the vehicle and a second parking area, where the plurality of parking areas include the second parking area; and determine the difficulty coefficient based on a position of each parking area relative to the first screening area.

Optionally, the first determining unit 2030 is configured to determine the first screening area based on a type of the second parking area, the width of the vehicle, the minimum parking radius of the vehicle, and the relative position relationship between the vehicle and the second parking area.

Optionally, the plurality of parking areas further include a third parking area, and the second determining unit 2040 is configured to determine the first parking area as the target park-in area when a difficulty coefficient for parking the vehicle into the first parking area is the same as a difficulty coefficient for parking the vehicle into the third parking area, and the relative position relationship indicates that the first parking area is located on a rear side of the vehicle and the third parking area is located on a left side or a right side of the vehicle.

Optionally, the plurality of parking areas further include a fourth parking area, and when the first parking area and the fourth parking area are located on a front passenger seat side of the vehicle, the second determining unit 2040 is configured to determine the first parking area as the target park-in area when a difficulty coefficient for parking the vehicle into the first parking area is the same as a difficulty coefficient for parking the vehicle into the fourth parking area, and the relative position relationship indicates that the first parking area is closer to a front row of the vehicle than the fourth parking area.

For example, the first parking area may include the parking space 1 shown in (b) or (c) in FIG. 9, and the fourth parking area may include the parking space 2 shown in (b) or (c) in FIG. 9.

Optionally, the plurality of parking areas further include a fifth parking area, and the second determining unit 2040 is configured to determine the first parking area as the target park-in area when the difficulty coefficient for parking the vehicle into the first parking area is the same as a difficulty coefficient for parking the vehicle into the fifth parking area, and the relative position relationship indicates that the first parking area is located on the front passenger seat side of the vehicle and the fifth parking area is located on a driver seat side of the vehicle.

For example, the first parking area may include the parking space 1 shown in (d) in FIG. 9, and the fifth parking area may include the parking space 2 shown in (d) in FIG. 9.

Optionally, the plurality of parking areas further include a sixth parking area, and when the sixth parking area and the first parking area are located on the front passenger seat side of the vehicle, the second determining unit 2040 is configured to determine the first parking area as the target park-in area based on the difficulty coefficient when the relative position relationship indicates that a central axis of the first parking area is perpendicular to a central axis of the vehicle and a central axis of the sixth parking area is parallel to the central axis of the vehicle.

For example, the first parking area may include the parking space 1 shown in (e) in FIG. 9, and the fifth parking area may include the parking space 5 shown in (e) in FIG. 9.

Optionally, the apparatus 2000 further includes a third determining unit, configured to: determine a first boundary of the first parking area based on outer contour information of the vehicle and first obstacle information around the first parking area; determine a second boundary of the first parking area based on parking space line information of the first parking area; and determine a first target pose of the vehicle in the first parking area based on the first boundary and the second boundary.

Optionally, the third determining unit is configured to: when the first boundary is greater than or equal to the second boundary, determine the first target pose based on the first boundary and the second boundary.

Optionally, the third determining unit is configured to determine the first target pose based on position information of a user in the vehicle, the first boundary, and the second boundary.

Optionally, the third determining unit is configured to determine the first target pose based on a first distance, a second distance, and a third distance, where the first distance is a distance between a front side of the vehicle and the first boundary, the second distance is a distance between a body side of the vehicle and the first boundary, and the third distance is a distance between a rear side of the vehicle and the first boundary.

Optionally, the body side includes a first side and a second side, the first side corresponds to a cockpit of the vehicle, the second side corresponds to a part other than the cockpit, and the second distance includes a distance between the first side and the first boundary and a distance between the second side and the first boundary.

Optionally, the apparatus 2000 includes a third obtaining unit and a fourth determining unit. The third obtaining unit is configured to obtain information about a park-out guide line and second obstacle information of a road indicated by the park-out guide line, where the park-out guide line is associated with a structure of the road. The fourth determining unit is configured to: determine a park-out pose set based on the information about the park-out guide line; and determine, based on the second obstacle information, a first park-out pose as a second target pose for the vehicle to park out of the first parking area, where the park-out pose set includes the first park-out pose.

Optionally, the fourth determining unit is configured to: determine a second park-out pose based on the information about the park-out guide line; and determine the park-out pose set based on the second park-out pose.

Optionally, the fourth determining unit is configured to: determine a first set from the park-out pose set based on the second obstacle information, where when the vehicle is at any park-out pose in the first set, the vehicle does not scrape against an obstacle indicated by the second obstacle information; determine a second set from the first set based on the second obstacle information, where when driving from a current position to any park-out pose in the second set, the vehicle does not scrape against the obstacle indicated by the second obstacle information; and determine the first park-out pose that is in the second set and that is closest to the second park-out pose as the second target pose.

For example, the first obtaining unit 2010, the second obtaining unit 2020, the first determining unit 2030, and the second determining unit 2040 may be disposed in the parking area determining module shown in FIG. 2, and the third obtaining unit, the third determining unit, and the fourth determining unit may be disposed in the parking pose determining module shown in FIG. 2. Alternatively, the first obtaining unit 2010, the second obtaining unit 2020, the first determining unit 2030, and the second determining unit 2040 may be disposed in the computing platform 150 shown in FIG. 1. In some possible implementations, the first obtaining unit 2010, the second obtaining unit 2020, the first determining unit 2030, and the second determining unit 2040 may be disposed in a cloud server, and the third obtaining unit, the third determining unit, and the fourth determining unit may also be disposed in the cloud server.

It should be understood that division into the units in the apparatus is merely logical function division. In actual implementation, all or some of the units may be integrated into one physical entity or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or functions of the units in the apparatus. The processor is, for example, a general-purpose processor, such as a CPU or a microprocessor, and the memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the units are implemented by designing a logical relationship between elements in the circuit. For another example, in another implementation, the hardware circuit may be implemented by using a PLD. An FPGA is used as an example. The hardware circuit may include a large number of logic gate circuits, and a connection relationship between the logic gate circuits is configured by using a configuration file, to implement functions of some or all of the units. All of the units in the apparatus may be implemented in a form of software invoked by a processor, or all of the units may be implemented in a form of a hardware circuit, or some of the units may be implemented in a form of software invoked by a processor, and the remaining part may be implemented in a form of a hardware circuit.

Each of the units in the apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units in the apparatus may be integrated together, or may be implemented independently. In an implementation, the units are integrated together and implemented in a form of a system-on-a-chip (system-on-a-chip, SoC). The SoC may include at least one processor, configured to implement any one of the foregoing methods or implement the functions of the units in the apparatus. Types of the at least one processor may be different, for example, may include a CPU and an FPGA, or a CPU and an artificial intelligence processor, or a CPU and a GPU, or the like.

In a specific implementation process, the operations performed by the first obtaining unit 2010, the second obtaining unit 2020, the first determining unit 2030, and the second determining unit 2040 may be performed by one processor, or may be performed by different processors. In addition, the operations performed by the first obtaining unit 2010, the second obtaining unit 2020, the first determining unit 2030, and the second determining unit 2040 and the operations performed by the third obtaining unit, the third determining unit, and the fourth determining unit may be performed by a same processor, or may be performed by different processors. In a specific implementation process, the one or more processors may be processors disposed in the computing platform 150 shown in FIG. 1, or the one or more processors may be processors disposed in a cloud server. In some possible implementations, the apparatus 2000 may be a chip disposed in the vehicle 100, or may be a chip disposed in a cloud server associated with the vehicle 100.

FIG. 21 is a block diagram of an automatic parking apparatus according to an embodiment of this application. The automatic parking apparatus 2100 shown in FIG. 21 may include a processor 2110, a transceiver 2120, and a memory 2130. The processor 2110, the transceiver 2120, and the memory 2130 are connected by using an internal connection path. The memory 2130 is configured to store instructions. The processor 2110 is configured to execute the instructions stored in the memory 2130, to implement the delay calculation method in the foregoing embodiments. Optionally, the memory 2130 may be coupled to the processor 2110 through an interface, or may be integrated with the processor 2110.

It should be noted that the transceiver 2120 may include but is not limited to a transceiver apparatus such as an input/output interface (input/output interface), to implement communication between the apparatus 2100 and another device or a communication network.

The memory 2130 may be a read-only memory (read-only memory, ROM), a static storage device, a dynamic storage device, or a random access memory (random access memory, RAM).

The transceiver 2120 uses, for example, but is not limited to, a transceiver apparatus such as a transceiver, to implement communication between the apparatus 2100 and another device or a communication network, so as to receive/send data/information used to implement the delay calculation method in the foregoing embodiments.

In a specific implementation process, the apparatus 2100 may be disposed in the computing platform 150 shown in FIG. 1, or the apparatus 2100 may be disposed in a cloud server.

An embodiment of this application further provides an intelligent driving device. The intelligent driving device includes the foregoing apparatus 2000 or the foregoing apparatus 2100.

In some possible implementations, the intelligent driving device may be a vehicle.

An embodiment of this application further provides a server. The server includes the foregoing apparatus 2000 or the foregoing apparatus 2100. The server is configured to be associated with a vehicle that performs automatic parking. The "association" includes that the vehicle and the server may communicate with each other. For example, the vehicle sends information sensed by a sensing system of the vehicle to the server, and the server sends one or more of information about a target park-in area determined by the server, information about a target park-in pose for the vehicle to park into the target park-in area, and information about a target park-out pose for the vehicle to park out of a parking area in which the vehicle is currently located to the vehicle, so that the vehicle performs automatic parking based on the information.

An embodiment of this application further provides a computer program product. The computer program product includes computer program code. When the computer program code is run on a computer, the computer is enabled to implement the delay calculation method in the foregoing embodiments of this application.

An embodiment of this application further provides a computer-readable storage medium. The computer-readable medium stores computer instructions. When the computer instructions are run on a computer, the computer is enabled to implement the delay calculation method in the foregoing embodiments of this application.

An embodiment of this application further provides a chip, including a circuit, configured to perform the delay calculation method in the foregoing embodiments of this application.

In an implementation process, the steps of the foregoing method may be completed by using an integrated logic circuit of hardware in a processor or instructions in a form of software. The method disclosed with reference to embodiments of this application may be directly performed by a hardware processor, or may be performed by using a combination of hardware in a processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing method in combination with the hardware in the processor. To avoid repetition, details are not described herein again.

It may be clearly understood by a person skilled in the art that for convenient and brief description, for detailed working processes of the system, apparatus, and unit described above, refer to the corresponding processes in the foregoing method embodiments. Details are not described herein again.

In the several embodiments provided in this application, it should be understood that the disclosed system, apparatus, and method may be implemented in other manners. For example, the apparatus embodiment described above is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located at one position, or may be distributed on a plurality of network units. Some or all of the units may be selected based on actual requirements to achieve the objectives of the solutions of embodiments.

In addition, functional units in embodiments of this application may be integrated into one processing unit, each unit may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An automatic parking method, comprising:

   obtaining information about a plurality of parking areas;
   obtaining a relative position relationship between a vehicle and each of the plurality of parking areas;
   determining, based on the relative position relationship, a difficulty coefficient for parking the vehicle into each parking area; and
   determining a first parking area as a target park-in area based on the relative position relationship and the difficulty coefficient, wherein the plurality of parking areas comprise the first parking area.

2. The method according to claim 1, wherein the relative position relationship comprises distance information between the vehicle and each parking area and included angle information between a driving direction of the vehicle and a central axis of each parking area; and
   the determining, based on the relative position relationship, a difficulty coefficient for parking the vehicle into each parking area comprises:
   determining the difficulty coefficient based on the distance information and the included angle information.

3. The method according to claim 1 or 2, wherein the determining, based on the relative position relationship, a difficulty coefficient for parking the vehicle into each parking area comprises:

   determining a first screening area based on a width of the vehicle, a minimum parking radius of the vehicle, and a relative position relationship between the vehicle and a second parking area, wherein the plurality of parking areas comprise the second parking area; and
   determining the difficulty coefficient based on a position of each parking area relative to the first screening area.

4. The method according to claim 3, wherein the determining a first screening area comprises:
   determining the first screening area based on a type of the second parking area, the width of the vehicle, the minimum parking radius of the vehicle, and the relative position relationship between the vehicle and the second parking area.

5. The method according to any one of claims 1 to 4, wherein the plurality of parking areas further comprise a third parking area, and the determining a first parking area as a target park-in area based on the relative position relationship and the difficulty coefficient comprises:
   determining the first parking area as the target park-in area when a difficulty coefficient for parking the vehicle into the first parking area is the same as a difficulty coefficient for parking the vehicle into the third parking area, and the relative position relationship indicates that the first parking area is located on a rear side of the vehicle and the third parking area is located on a left side or a right side of the vehicle.

6. The method according to any one of claims 1 to 4, wherein the plurality of parking areas further comprise a fourth parking area, and when the first parking area and the fourth parking area are located on a front passenger seat side of the vehicle, the determining a first parking area as a target park-in area based on the relative position relationship and the difficulty coefficient comprises:

determining the first parking area as the target park-in area when a difficulty coefficient for parking the vehicle into the first parking area is the same as a difficulty coefficient for parking the vehicle into the fourth parking area, and the relative position relationship indicates that the first parking area is closer to a front row of the vehicle than the fourth parking area.

7. The method according to any one of claims 1 to 6, wherein the plurality of parking areas further comprise a fifth parking area, and the determining a first parking area as a target park-in area based on the relative position relationship and the difficulty coefficient comprises:
determining the first parking area as the target park-in area when the difficulty coefficient for parking the vehicle into the first parking area is the same as a difficulty coefficient for parking the vehicle into the fifth parking area, and the relative position relationship indicates that the first parking area is located on the front passenger seat side of the vehicle and the fifth parking area is located on a driver seat side of the vehicle.

8. The method according to any one of claims 1 to 7, wherein the plurality of parking areas further comprise a sixth parking area, and when the sixth parking area and the first parking area are located on the front passenger seat side of the vehicle, the determining a first parking area as a target park-in area based on the relative position relationship and the difficulty coefficient comprises:
determining the first parking area as the target park-in area based on the difficulty coefficient when the relative position relationship indicates that a central axis of the first parking area is perpendicular to a central axis of the vehicle and a central axis of the sixth parking area is parallel to the central axis of the vehicle.

9. The method according to any one of claims 1 to 8, wherein the method further comprises:

determining a first boundary of the first parking area based on outer contour information of the vehicle and first obstacle information around the first parking area;
determining a second boundary of the first parking area based on parking space line information of the first parking area; and
determining a first target pose of the vehicle in the first parking area based on the first boundary and the second boundary.

10. The method according to claim 9, wherein the determining a first target pose of the vehicle in the first parking area based on the first boundary and the second boundary comprises:
when the first boundary is greater than or equal to the second boundary, determining the first target pose based on the first boundary and the second boundary.

11. The method according to claim 9 or 10, wherein the determining a first target pose of the vehicle in the first parking area based on the first boundary and the second boundary comprises:
determining the first target pose based on position information of a user in the vehicle, the first boundary, and the second boundary.

12. The method according to any one of claims 9 to 11, wherein the determining a first target pose of the vehicle in the first parking area based on the first boundary and the second boundary comprises:

determining the first target pose based on a first distance, a second distance, and a third distance, wherein the first distance is a distance between a front side of the vehicle and the first boundary, the second distance is a distance between a body side of the vehicle and the first boundary, and the third distance is a distance between a rear side of the vehicle and the first boundary.

13. The method according to claim 12, wherein the body side comprises a first side and a second side, the first side corresponds to a cockpit of the vehicle, the second side corresponds to a part other than the cockpit, and the second distance comprises a distance between the first side and the first boundary and a distance between the second side and the first boundary.

14. The method according to any one of claims 1 to 13, wherein after the vehicle parks into the first parking area, the method further comprises:

obtaining information about a park-out guide line and second obstacle information of a road indicated by the park-out guide line, wherein the park-out guide line is associated with a structure of the road;

determining a park-out pose set based on the information about the park-out guide line; and

determining, based on the second obstacle information, a first park-out pose as a second target pose for the vehicle to park out of the first parking area, wherein the park-out pose set comprises the first park-out pose.

15. The method according to claim 14, wherein the determining a park-out pose set based on the information about the park-out guide line comprises:

determining a second park-out pose based on the information about the park-out guide line; and

determining the park-out pose set based on the second park-out pose.

16. The method according to claim 15, wherein the determining, based on the second obstacle information, a first park-out pose as a second target pose for the vehicle to park out of the first parking area comprises:

determining a first set from the park-out pose set based on the second obstacle information, wherein when the vehicle is at any park-out pose in the first set, the vehicle does not scrape against an obstacle indicated by the second obstacle information;

determining a second set from the first set based on the second obstacle information, wherein when driving from a current position to any park-out pose in the second set, the vehicle does not scrape against the obstacle indicated by the second obstacle information; and

determining the first park-out pose that is in the second set and that is closest to the second park-out pose as the second target pose.

17. An automatic parking apparatus, comprising a first obtaining unit, a second obtaining unit, a first determining unit, and a second determining unit, wherein

the first obtaining unit is configured to obtain information about a plurality of parking areas;

the second obtaining unit is configured to obtain a relative position relationship between a vehicle and each of the plurality of parking areas;

the first determining unit is configured to determine, based on the relative position relationship, a difficulty coefficient for parking the vehicle into each parking area; and

the second determining unit is configured to determine a first parking area as a target park-in area based on the relative position relationship and the difficulty coefficient, wherein the plurality of parking areas comprise the first parking area.

18. The apparatus according to claim 17, wherein the relative position relationship comprises distance information between the vehicle and each parking area and included angle information between a driving direction of the vehicle and a central axis of each parking area; and

the first determining unit is configured to:

determine the difficulty coefficient based on the distance information and the included angle information.

19. The apparatus according to claim 17 or 18, wherein the first determining unit is configured to:

determine a first screening area based on a width of the vehicle, a minimum parking radius of the vehicle, and a relative position relationship between the vehicle and a second parking area, wherein the plurality of parking areas comprise the second parking area; and

determine the difficulty coefficient based on a position of each parking area relative to the first screening area.

20. The apparatus according to claim 19, wherein the first determining unit is configured to:

determine the first screening area based on a type of the second parking area, the width of the vehicle, the minimum parking radius of the vehicle, and the relative position relationship between the vehicle and the second parking area.

21. The apparatus according to any one of claims 17 to 20, wherein the plurality of parking areas further comprise a third parking area, and the second determining unit is configured to:

determine the first parking area as the target park-in area when a difficulty coefficient for parking the vehicle into the first parking area is the same as a difficulty coefficient for parking the vehicle into the third parking area, and the relative position relationship indicates that the first parking area is located on a rear side of the vehicle and the third parking area is located on a left side or a right side of the vehicle.

22. The apparatus according to any one of claims 17 to 20, wherein the plurality of parking areas further comprise a fourth parking area, and when the first parking area and the fourth parking area are located on a front passenger seat side of the vehicle, the second determining unit is configured to:
determine the first parking area as the target park-in area when a difficulty coefficient for parking the vehicle into the first parking area is the same as a difficulty coefficient for parking the vehicle into the fourth parking area, and the relative position relationship indicates that the first parking area is closer to a front row of the vehicle than the fourth parking area.

23. The apparatus according to any one of claims 17 to 22, wherein the plurality of parking areas further comprise a fifth parking area, and the second determining unit is configured to:
determine the first parking area as the target park-in area when the difficulty coefficient for parking the vehicle into the first parking area is the same as a difficulty coefficient for parking the vehicle into the fifth parking area, and the relative position relationship indicates that the first parking area is located on the front passenger seat side of the vehicle and the fifth parking area is located on a driver seat side of the vehicle.

24. The apparatus according to any one of claims 17 to 23, wherein the plurality of parking areas further comprise a sixth parking area, and when the sixth parking area and the first parking area are located on the front passenger seat side of the vehicle, the second determining unit is configured to:
determine the first parking area as the target park-in area based on the difficulty coefficient when the relative position relationship indicates that a central axis of the first parking area is perpendicular to a central axis of the vehicle and a central axis of the sixth parking area is parallel to the central axis of the vehicle.

25. The apparatus according to any one of claims 17 to 24, wherein the apparatus further comprises a third determining unit, configured to:

   determine a first boundary of the first parking area based on outer contour information of the vehicle and first obstacle information around the first parking area;
   determine a second boundary of the first parking area based on parking space line information of the first parking area; and
   determine a first target pose of the vehicle in the first parking area based on the first boundary and the second boundary.

26. The apparatus according to claim 25, wherein the third determining unit is configured to:
when the first boundary is greater than or equal to the second boundary, determine the first target pose based on the first boundary and the second boundary.

27. The apparatus according to claim 25 or 26, wherein the third determining unit is configured to:
determine the first target pose based on position information of a user in the vehicle, the first boundary, and the second boundary.

28. The apparatus according to any one of claims 25 to 27, wherein the third determining unit is configured to:

   determine the first target pose based on a first distance, a second distance, and a third distance, wherein the first distance is a distance between a front side of the vehicle and the first boundary, the second distance is a distance between a body side of the vehicle and the first boundary, and the third distance is a distance between a rear side of the vehicle and the first boundary.

29. The apparatus according to claim 28, wherein the body side comprises a first side and a second side, the first side corresponds to a cockpit of the vehicle, the second side corresponds to a part other than the cockpit, and the second distance comprises a distance between the first side and the first boundary and a distance between the second side and the first boundary.

30. The apparatus according to any one of claims 17 to 29, wherein the apparatus comprises a third obtaining unit and a fourth determining unit;

   the third obtaining unit is configured to obtain information about a park-out guide line and second obstacle information of a road indicated by the park-out guide line, wherein the park-out guide line is associated with a structure of the road; and

the fourth determining unit is configured to: determine a park-out pose set based on the information about the park-out guide line; and

determine, based on the second obstacle information, a first park-out pose as a second target pose for the vehicle to park out of the first parking area, wherein the park-out pose set comprises the first park-out pose.

31. The apparatus according to claim 30, wherein the fourth determining unit is configured to:

determine a second park-out pose based on the information about the park-out guide line; and
determine the park-out pose set based on the second park-out pose.

32. The apparatus according to claim 31, wherein the fourth determining unit is configured to:

determine a first set from the park-out pose set based on the second obstacle information, wherein when the vehicle is at any park-out pose in the first set, the vehicle does not scrape against an obstacle indicated by the second obstacle information;
determine a second set from the first set based on the second obstacle information, wherein when driving from a current position to any park-out pose in the second set, the vehicle does not scrape against the obstacle indicated by the second obstacle information; and
determine the first park-out pose that is in the second set and that is closest to the second park-out pose as the second target pose.

33. An automatic parking apparatus, comprising:

a memory, configured to store a computer program; and
a processor, configured to execute the computer program stored in the memory, to enable the apparatus to perform the method according to any one of claims 1 to 16.

34. An intelligent driving device, comprising the apparatus according to any one of claims 17 to 33.

35. A server, comprising the apparatus according to any one of claims 17 to 33.

36. A computer-readable storage medium, wherein the computer-readable storage medium stores instructions, and when the instructions are executed by a processor, the processor is enabled to implement the method according to any one of claims 1 to 16.

37. A chip, wherein the chip comprises a circuit, and the circuit is configured to perform the method according to any one of claims 1 to 16.

Vehicle 100

Sensing system 120

Display apparatus 130

Computing platform 150

Processor 151

Processor 152

...

Processor 15n

FIG. 1

Sensing module

Parking area determining module

Parking pose determining module

Planning control module

Actuator

FIG. 2

FIG. 3

EP 4 613 592 A1

400

| S401: Obtain information about a plurality of parking areas |
| --- |

| S402: Obtain a relative position relationship between a vehicle and each of the plurality of parking areas |
| --- |

| S403: Determine, based on the relative position relationship, a difficulty coefficient for parking the vehicle into each parking area |
| --- |

| S404: Determine a first parking area as a target park-in area based on the relative position relationship and the difficulty coefficient, where the plurality of parking areas include the first parking area |
| --- |

FIG. 4

Parking area on a left side of the vehicle

Parking area on a right side of the vehicle

Parking area on a rear left side of the vehicle

Parking area on a rear right side of the vehicle

Parking space

Parking area on a rear side of the vehicle

FIG. 5

**(a)**

**(b)**

FIG. 6

**(a)**

**(b)**

FIG. 7

(a)

(b)

(c)

FIG. 8

FIG. 9

**1000**

| S1010: Determine a first boundary of a first parking area based on outer contour information of a vehicle and first obstacle information around the first parking area |
| --- |

| S1020: Determine a second boundary of the first parking area based on parking space line information of the first parking area |
| --- |

| S1030: Determine a first target pose of the vehicle in the first parking area based on the first boundary and the second boundary |
| --- |

FIG. 10

| $q_2$ | $q_3$ | $q_4$ |
| --- | --- | --- |
| $q_1$ | $p$ | $q_5$ |
| $q_8$ | $q_7$ | $q_6$ |

(a)

(b)

FIG. 11

First obstacle boundary
Second obstacle boundary
Outer contour of the vehicle
Outer contour envelope of the vehicle
Obstacle
Obstacle
Boundary 1
Boundary 2

(a)

(b)

FIG. 12

EP 4 613 592 A1

FIG. 13

FIG. 14

EP 4 613 592 A1

FIG. 15(a)

FIG. 15(b)

FIG. 15(c)

Central axis of the parking space

Central axis of the vehicle

Boundary 1

Boundary 2

1510

1520

Central axis of Central
the parking axis of the
space vehicle

Boundary 1

1502

Boundary 2

1501

FIG. 15(d)

Central axis
of the parking Central
space axis of the
vehicle

Boundary 2
Boundary 1

Boundary 2

FIG. 15(e)

Boundary 1

Boundary 2

Central axis
of the vehicle

Central axis
of the parking
space

1530

FIG. 15(f)

**1600**

| S1610: Obtain information about a park-out guide line and second obstacle information of a road indicated by the park-out guide line, where the park-out guide line is associated with a structure of the road |
| --- |

| S1620: Determine a park-out pose set based on the information about the park-out guide line |
| --- |

| S1630: Determine, based on the second obstacle information, a first park-out pose as a second target pose for a vehicle to park out of a parking area in which the vehicle is currently located, where the park-out pose set includes the first park-out pose |
| --- |

FIG. 16

FIG. 17

FIG. 18

Azimuth

(a)

(b)

| Longitudinal discretization index |
|---|

| Lateral discretization index |
|---|

| Angular discretization index |
|---|

Translation and combination

| Longitudinal discretization value | Lateral discretization value | Angular discretization value |
|---|---|---|

Map: key -> value

| Quickly locate a discretized space status |
|---|

(c)

■ Goal node
▲ Open node
· Close node

(d)

FIG. 19

Apparatus 2000

First obtaining unit 2010

Second obtaining unit 2020

First determining unit 2030

Second determining unit 2040

FIG. 20

Apparatus 2100

Processor
2110

Memory
2130

Transceiver
2120

FIG. 21

## INTERNATIONAL SEARCH REPORT

International application No.

**PCT/CN2023/125839**

### A. CLASSIFICATION OF SUBJECT MATTER

B60W30/06(2006.01)i; G08G1/14(2006.01)i

According to International Patent Classification (IPC) or to both national classification and IPC

### B. FIELDS SEARCHED

Minimum documentation searched (classification system followed by classification symbols)

B60W,G08G

Documentation searched other than minimum documentation to the extent that such documents are included in the fields searched

Electronic data base consulted during the international search (name of data base and, where practicable, search terms used)

CNTXT, ENTXTC, WPABSC, VEN, CNKI: 自动泊车, 目标, 车位, 难度, 难易, 相对位置, 优先, 障碍, parking difficulty, distance, priority, obstacle

### C. DOCUMENTS CONSIDERED TO BE RELEVANT

| Category* | Citation of document, with indication, where appropriate, of the relevant passages | Relevant to claim No. |
|---|---|---|
| PX | CN 115691200 A (INDUSTRIAL AND COMMERCIAL BANK OF CHINA LIMITED) 03 February 2023 (2023-02-03) description, paragraphs 62-171 | 1-2, 17-18, 33-37 |
| X | CN 113954823 A (HUMAN HORIZONS (SHANGHAI) AUTOMATIC DRIVING TECHNOLOGY CO., LTD.) 21 January 2022 (2022-01-21) description, paragraphs 35-47, and figure 1 | 1-2, 17-18, 33-37 |
| Y | CN 113954823 A (HUMAN HORIZONS (SHANGHAI) AUTOMATIC DRIVING TECHNOLOGY CO., LTD.) 21 January 2022 (2022-01-21) description, paragraphs 35-47, and figure 1 | 3-16, 19-32 |
| Y | KR 20170055334 A (LG ELECTRONICS INC.) 19 May 2017 (2017-05-19) description, paragraphs 158-308, and figures 7-15 | 3-8, 19-24 |
| Y | CN 113978453 A (SHANGHAI LUOKE INTELLIGENT TECHNOLOGY CO., LTD.) 28 January 2022 (2022-01-28) description, paragraphs 24-52, and figures 1-2 | 9-16, 25-32 |

☑ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **08 December 2023** | **05 January 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/125839** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 115410409 A (ZHEJIANG GEELY HOLDING GROUP CO., LTD. et al.) 29 November 2022 (2022-11-29)<br>entire document | 1-37 |
| A | CN 111597495 A (HANGZHOU NORMAL UNIVERSITY QIANJIANG COLLEGE) 28 August 2020 (2020-08-28)<br>entire document | 1-37 |

Form PCT/ISA/210 (second sheet) (July 2022)

## INTERNATIONAL SEARCH REPORT
### Information on patent family members

International application No.

**PCT/CN2023/125839**

| Patent document cited in search report | | | Publication date (day/month/year) | Patent family member(s) | Publication date (day/month/year) |
|---|---|---|---|---|---|
| CN | 115691200 | A | 03 February 2023 | None | |
| CN | 113954823 | A | 21 January 2022 | None | |
| KR | 20170055334 | A | 19 May 2017 | None | |
| CN | 113978453 | A | 28 January 2022 | None | |
| CN | 115410409 | A | 29 November 2022 | None | |
| CN | 111597495 | A | 28 August 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211549247X